# EUROPEAN PATENT APPLICATION

(11) **EP 4 657 278 A1**
(43) Date of publication of application: **03.12.2025**
(21) Application number: 24315260.0
(22) Date of filing: 31.05.2024
(51) Int. Cl.: G06F 16/31, G06F 16/335

(54) **DEVICE, SYSTEM AND METHOD FOR REDUCING LARGE LANGUAGE MODEL ENGINE USAGE FOR SUSTAINABLE RESULT GENERATION**

(71) Applicant: Amadeus S.A.S., 06410 Biot (FR)
(72) Inventor: CAO, Hongliu, 06300 Nice (FR)
(74) Representative: Samson & Partner Patentanwälte mbB

(57) **Abstract**

For given categories, a computing device generates, using large language model engines, associated text descriptions describing, with respect to the categories, a plurality of subjects-of-interest (SOIs), and determines respective similarity scores between pairs of the SOIs by comparing the associated descriptions. For a given identifier with an historical association with one or more given SOIs, the computing device compares, for the categories, the respective similarity scores between the one or more given SOIs with other similarity scores between the one or more given SOIs and remaining SOIs, and selects, for one or more categories, one or more remaining SOIs having associated similarity scores with the given SOIs, closest to the respective similarity scores between the given SOIs, or having highest similarity scores with the given SOIs. The computing device outputs one or more respective indicators of the remaining SOIs, as selected, to a client device associated with the given identifier.

## Description

### FIELD

The specification relates generally to large language models, and specifically to a device, system and method for reducing large language model engine usage for sustainable result generation.

### BACKGROUND

Large language model engine usage is becoming more common in generating results, for example when given inputs are provided, and such results tend to be easier to generate than when programmatic search engines are used, as such programmatic search engines must be populated with predetermined questions and associated answers, which, as the number of predetermined questions and associated answers increase, becomes challenging to sustain and/or explain how answers are provided. On the other hand, while large language model engines allow for more types of responses, responses from large language model engines may be slower to generate than from a programmatic search engine (e.g., a chatbot), use more processing resources, and furthermore may come at a high power cost, leading to increases in CO₂ emission, at least relative to use of programmatic search engines. Indeed, technical challenges when using large language model engines include sustainability (e.g., minimizing or reducing power consumption and hence CO₂ emissions), explainability (e.g., provide an explanation of how and/or why a given result was provided), and privacy (e.g., minimize usage of user information when providing results).

### SUMMARY

A first aspect of the present specification provides a method comprising: for given categories, generating, via a computing device, using one or more large language model (LLM) engines, associated text descriptions describing, with respect to the given categories, a plurality of subjects-of-interest (SOIs); determining, via the computing device, for the given categories, respective similarity scores between pairs of the plurality of SOIs by comparing the associated text descriptions for the given categories of the plurality of SOIs; for a given identifier with an historical association with one or more given SOIs of the plurality of SOIs, comparing, via the computing device, for the given categories, the respective similarity scores between the one or more given SOIs with other similarity scores between the one or more given SOIs and remaining SOIs of the plurality of SOIs; selecting, via the computing device, for one or more of the given categories, one or more of the remaining SOIs having associated similarity scores with the one or more given SOIs, closest to the respective similarity scores between the one or more given SOIs, or having highest similarity scores with the one or more given SOIs; and outputting, via the computing device, one or more respective indicators of the one or more of the remaining SOIs, as selected, to a client device associated with the given identifier.

At the method of the first aspect, selecting of the one or more of the remaining SOIs may occur without further use of the one or more LLM engines.

At the method of the first aspect, generating the associated text descriptions using the one or more LLM engines may use at least one of more processing power and more energy than comparing, for the given categories, the respective similarity scores between the one or more given SOIs with the other similarity scores between the one or more given SOIs and the remaining SOIs of the plurality of SOIs.

The method of the first aspect may further comprise, as a number of historical associations between the given identifier, and the one or more given SOIs of the plurality of SOIs increases: repeating the comparing of the respective similarity scores, the selecting of the more of the remaining SOIs, and the outputting without repeating generating of the associated text descriptions and determining of the respective similarity scores.

The method of the first aspect may further comprise: generating the associated text descriptions using a plurality of the LLM engines, such that a plurality of the associated text descriptions are generated for each combination of a respective category and a respective SOI; selecting one respective associated text description from the plurality of the associated text descriptions for each combination of the respective category and the respective SOI; and using the one respective associated text description when comparing the associated text descriptions for the given categories of the plurality of SOIs.

At the method of the first aspect, comparing the associated text descriptions for the given categories of the plurality of SOIs may occur using one or more of a semantic comparison algorithm and a term frequency-inverse document frequency algorithm.

At the method of the first aspect, the given identifier may be historically associated with two or more given SOIs, and the method may further comprise: selecting a given number of the given categories, having highest respective similarity scores between the two or more given SOIs; and performing the comparing of the respective similarity scores by comparing, for only the given number of the given categories, the respective similarity scores between the two or more given SOIs with the other similarity scores between the two or more given SOIs and the remaining SOIs of the plurality of SOIs, such that the selecting of the one or more of the remaining SOIs occurs only for the given categories.

At the method of the first aspect, the given identifier may be historically associated with two or more given SOIs, and the method may further comprise: selecting a given number of the given categories, having highest respective similarity scores between the two or more given SOIs; for a given category of the given number of the given categories, combining the respective similarity scores between the two or more given SOIs and the remaining SOIs of the plurality of SOIs to generate combined respective similarly scores between the two or more given SOIs and the remaining SOIs; and for the given category, selecting the one or more of the remaining SOIs having associated combined respective similarity scores, with the two or more given SOIs, closest to combined similarity scores between the two or more given SOIs, or having highest combined similarity scores with the one or more given SOIs, such that one or more of the remaining SOIs are selected, and the one or more respective indicators thereof are output to the client device, on a per category basis.

At the method of the first aspect, the given identifier may be historically associated with two or more given SOIs, and the method may further comprise: selecting a given number of the given categories, having highest respective similarity scores between the two or more given SOIs; for all of the given number of the given categories, combining the respective similarity scores between the two or more given SOIs and the remaining SOIs of the plurality of SOIs to generate combined respective similarly scores between the two or more given SOIs and the remaining SOIs; and selecting the one or more of the remaining SOIs having associated combined respective similarity scores with the two or more given SOIs closest to combined similarity scores between the two or more given SOIs, or having highest combined similarity scores with the one or more given SOIs, such that one or more of the remaining SOIs are selected, and output to the client device, on a basis of combined categories.

At the method of the first aspect, the given identifier may be historically associated with two or more given SOIs, the respective similarity scores between the pairs of the plurality of SOIs may be determined in the form of vectors, and the method may further comprise: selecting a given number of the given categories, having highest respective similarity scores between the two or more given SOIs; averaging respective vectors of the respective similarity scores between the two or more given SOIs and the remaining SOIs; and selecting, for the one or more of the given categories, one or more of the remaining SOIs having associated similarity scores with the one or more given SOIs using at least one averaged vector.

A second aspect of the present specification provides a computing device comprising: a communication interface; a controller; and a computer-readable storage medium having stored thereon program instructions that, when executed by the controller, cause the controller to perform a set of operations comprising: for given categories, generating, using one or more large language model (LLM) engines, associated text descriptions describing, with respect to the given categories, a plurality of subjects-of-interest (SOIs); determining, for the given categories, respective similarity scores between pairs of the plurality of SOIs by comparing the associated text descriptions for the given categories of the plurality of SOIs; for a given identifier with an historical association with one or more given SOIs of the plurality of SOIs, comparing, for the given categories, the respective similarity scores between the one or more given SOIs with other similarity scores between the one or more given SOIs and remaining SOIs of the plurality of SOIs; selecting, for one or more of the given categories, one or more of the remaining SOIs having associated similarity scores with the one or more given SOIs, closest to the respective similarity scores between the one or more given SOIs, or having highest similarity scores with the one or more given SOIs; and outputting, via the communication interface, one or more respective indicators of the one or more of the remaining SOIs, as selected, to a client device associated with the given identifier.

At the computing device of the second aspect, selecting of the one or more of the remaining SOIs may occur without further use of the one or more LLM engines.

At the computing device of the second aspect, generating the associated text descriptions using the one or more LLM engines may use at least one of more processing power and more energy than comparing, for the given categories, the respective similarity scores between the one or more given SOIs with the other similarity scores between the one or more given SOIs and the remaining SOIs of the plurality of SOIs.

At the computing device of the second aspect, the set of operations may further comprise, as a number of historical associations between the given identifier, and the one or more given SOIs of the plurality of SOIs increases: repeating the comparing of the respective similarity scores, the selecting of the more of the remaining SOIs, and the outputting without repeating generating of the associated text descriptions and determining of the respective similarity scores.

At the computing device of the second aspect, the set of operations may further comprise: generating the associated text descriptions using a plurality of the LLM engines, such that a plurality of the associated text descriptions are generated for each combination of a respective category and a respective SOI; selecting one respective associated text description from the plurality of the associated text descriptions for each combination of the respective category and the respective SOI; and using the one respective associated text description when comparing the associated text descriptions for the given categories of the plurality of SOIs.

At the computing device of the second aspect, comparing the associated text descriptions for the given categories of the plurality of SOIs may occur using one or more of a semantic comparison algorithm and a term frequency-inverse document frequency algorithm.

At the computing device of the second aspect, the given identifier may be historically associated with two or more given SOIs, and the set of operations may further comprise: selecting a given number of the given categories, having highest respective similarity scores between the two or more given SOIs; and performing the comparing of the respective similarity scores by comparing, for only the given number of the given categories, the respective similarity scores between the two or more given SOIs with the other similarity scores between the two or more given SOIs and the remaining SOIs of the plurality of SOIs, such that the selecting of the one or more of the remaining SOIs may occur only for the given categories.

At the computing device of the second aspect, the given identifier may be historically associated with two or more given SOIs, and the set of operations may further comprise: selecting a given number of the given categories, having highest respective similarity scores between the two or more given SOIs; for a given category of the given number of the given categories, combining the respective similarity scores between the two or more given SOIs and the remaining SOIs of the plurality of SOIs to generate combined respective similarly scores between the two or more given SOIs and the remaining SOIs; and for the given category, selecting the one or more of the remaining SOIs having associated combined respective similarity scores, with the two or more given SOIs, closest to combined similarity scores between the two or more given SOIs, or having highest combined similarity scores with the one or more given SOIs, such that one or more of the remaining SOIs are selected, and the one or more respective indicators thereof are output to the client device, on a per category basis.

At the computing device of the second aspect, the given identifier may be historically associated with two or more given SOIs, and the set of operations may further comprise: selecting a given number of the given categories, having highest respective similarity scores between the two or more given SOIs; for all of the given number of the given categories, combining the respective similarity scores between the two or more given SOIs and the remaining SOIs of the plurality of SOIs to generate combined respective similarly scores between the two or more given SOIs and the remaining SOIs ; and selecting the one or more of the remaining SOIs having associated combined respective similarity scores with the two or more given SOIs closest to combined similarity scores between the two or more given SOIs, or having highest combined similarity scores with the one or more given SOIs, such that one or more of the remaining SOIs are selected, and output to the client device, on a basis of combined categories.

At the computing device of the second aspect, the given identifier may be historically associated with two or more given SOIs, the respective similarity scores between the pairs of the plurality of SOIs are determined in the form of vectors, and the set of operations may further comprise: selecting a given number of the given categories, having highest respective similarity scores between the two or more given SOIs; averaging respective vectors of the respective similarity scores between the two or more given SOIs and the remaining SOIs; and selecting, for the one or more of the given categories, one or more of the remaining SOIs having associated similarity scores with the one or more given SOIs using at least one averaged vector.

A third aspect of the present specification provides a non-transitory computer-readable storage medium having stored thereon program instructions that, when executed by at least one computing device, causes the at least one computing device to perform a method comprising: for given categories, generating, via the at least one computing device, using one or more large language model (LLM) engines, associated text descriptions describing, with respect to the given categories, a plurality of subjects-of-interest (SOIs); determining, via the at least one computing device, for the given categories, respective similarity scores between pairs of the plurality of SOIs by comparing the associated text descriptions for the given categories of the plurality of SOIs; for a given identifier with an historical association with one or more given SOIs of the plurality of SOIs, comparing, via the at least one computing device, for the given categories, the respective similarity scores between the one or more given SOIs with other similarity scores between the one or more given SOIs and remaining SOIs of the plurality of SOIs; selecting, via the at least one computing device, for one or more of the given categories, one or more of the remaining SOIs having associated similarity scores with the one or more given SOIs, closest to the respective similarity scores between the one or more given SOIs, or having highest similarity scores with the one or more given SOIs; and outputting, via the at least one computing device, one or more respective indicators of the one or more of the remaining SOIs, as selected, to a client device associated with the given identifier.

At the method of the third aspect, selecting of the one or more of the remaining SOIs may occur without further use of the one or more LLM engines.

At the method of the third aspect, generating the associated text descriptions using the one or more LLM engines may use at least one of more processing power and more energy than comparing, for the given categories, the respective similarity scores between the one or more given SOIs with the other similarity scores between the one or more given SOIs and the remaining SOIs of the plurality of SOIs.

The method of the third aspect may further comprise, as a number of historical associations between the given identifier, and the one or more given SOIs of the plurality of SOIs increases: repeating the comparing of the respective similarity scores, the selecting of the more of the remaining SOIs, and the outputting without repeating generating of the associated text descriptions and determining of the respective similarity scores.

The method of the third aspect may further comprise: generating the associated text descriptions using a plurality of the LLM engines, such that a plurality of the associated text descriptions are generated for each combination of a respective category and a respective SOI; selecting one respective associated text description from the plurality of the associated text descriptions for each combination of the respective category and the respective SOI; and using the one respective associated text description when comparing the associated text descriptions for the given categories of the plurality of SOIs.

At the method of the third aspect, comparing the associated text descriptions for the given categories of the plurality of SOIs may occur using one or more of a semantic comparison algorithm and a term frequency-inverse document frequency algorithm.

At the method of the third aspect, the given identifier may be historically associated with two or more given SOIs, and the method may further comprise: selecting a given number of the given categories, having highest respective similarity scores between the two or more given SOIs; and performing the comparing of the respective similarity scores by comparing, for only the given number of the given categories, the respective similarity scores between the two or more given SOIs with the other similarity scores between the two or more given SOIs and the remaining SOIs of the plurality of SOIs, such that the selecting of the one or more of the remaining SOIs occurs only for the given categories.

At the method of the third aspect, the given identifier may be historically associated with two or more given SOIs, and the method may further comprise: selecting a given number of the given categories, having highest respective similarity scores between the two or more given SOIs; for a given category of the given number of the given categories, combining the respective similarity scores between the two or more given SOIs and the remaining SOIs of the plurality of SOIs to generate combined respective similarly scores between the two or more given SOIs and the remaining SOIs; and for the given category, selecting the one or more of the remaining SOIs having associated combined respective similarity scores, with the two or more given SOIs, closest to combined similarity scores between the two or more given SOIs, or having highest combined similarity scores with the one or more given SOIs, such that one or more of the remaining SOIs are selected, and the one or more respective indicators thereof are output to the client device, on a per category basis.

At the method of the third aspect, the given identifier may be historically associated with two or more given SOIs, and the method may further comprise: selecting a given number of the given categories, having highest respective similarity scores between the two or more given SOIs; for all of the given number of the given categories, combining the respective similarity scores between the two or more given SOIs and the remaining SOIs of the plurality of SOIs to generate combined respective similarly scores between the two or more given SOIs and the remaining SOIs; and selecting the one or more of the remaining SOIs having associated combined respective similarity scores with the two or more given SOIs closest to combined similarity scores between the two or more given SOIs, or having highest combined similarity scores with the one or more given SOIs, such that one or more of the remaining SOIs are selected, and output to the client device, on a basis of combined categories.

At the method of the third aspect, the given identifier may be historically associated with two or more given SOIs, the respective similarity scores between the pairs of the plurality of SOIs may be determined in the form of vectors, and the method may further comprise: selecting a given number of the given categories, having highest respective similarity scores between the two or more given SOIs; averaging respective vectors of the respective similarity scores between the two or more given SOIs and the remaining SOIs; and selecting, for the one or more of the given categories, one or more of the remaining SOIs having associated similarity scores with the one or more given SOIs using at least one averaged vector.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a system for reducing large language model engine usage for sustainable result generation, according to non-limiting examples.
FIG. 2 depicts a computing device for reducing large language model engine usage for sustainable result generation, according to non-limiting examples.
FIG. 3 depicts a method for reducing large language model engine usage for sustainable result generation, according to non-limiting examples.
FIG. 4 depicts the system of FIG. 1 implementing aspects of method for reducing large language model engine usage for sustainable result generation, according to non-limiting examples.
FIG. 5 depicts the system of FIG. 1 implementing further aspects of method for reducing large language model engine usage for sustainable result generation, according to non-limiting examples.
FIG. 6 depicts the system of FIG. 1 implementing further aspects of method for reducing large language model engine usage for sustainable result generation, according to non-limiting examples.
FIG. 7 depicts an example similarity score matrix between subjects-of-interest, for a given category.
FIG. 8 depicts an example similarity score matrix between subjects-of-interest, for another given category.
FIG. 9 depicts an example similarity score matrix between subjects-of-interest, for yet another given category.
FIG. 10 depicts the system of FIG. 1 implementing further aspects of method for reducing large language model engine usage for sustainable result generation, according to non-limiting examples.
FIG. 11 depicts the system of FIG. 1 implementing further aspects of method for reducing large language model engine usage for sustainable result generation, according to non-limiting examples.
FIG. 12 depicts example similarity score matrices that are averaged and/or combined.
FIG. 13 depicts an example of a combined similarity score matrix.
FIG. 14 depicts the system of FIG. 1 implementing further aspects of method for reducing large language model engine usage for sustainable result generation, according to non-limiting examples.

### DETAILED DESCRIPTION

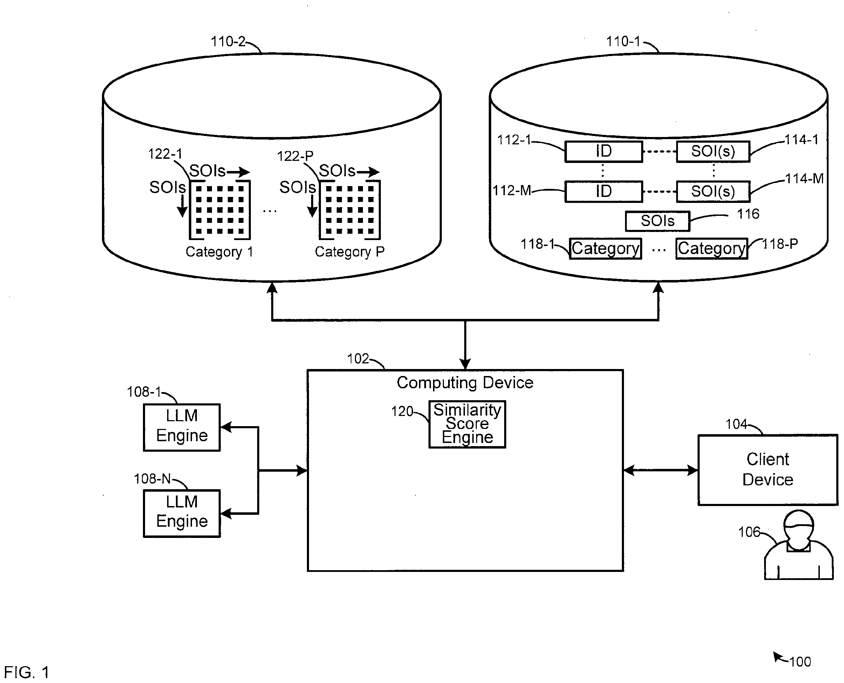

FIG. 1 depicts a system 100 for reducing large language model engine usage for sustainable result generation. The various components of the system 100 are in communication via any suitable combination of wired and/or wireless communication links, and communication links between components of the system 100 are depicted in FIG. 1, and throughout the present specification, as double-ended arrows between respective components. The communication links may include any suitable combination of wireless and/or wired links and/or wireless and/or wired communication networks, and the like.

The system 100 comprises a computing device 102, a client device 104 associated with a given operator 106 thereof, and one or more large language model (LLM) engines 108-1...108-N. The LLM engines 108-1...108-N are interchangeably referred to hereafter as, collectively, the LLM engines 108 and, generically, as an LLM engine 108. This convention will be used throughout the present specification.

As used herein, the term "engine" refers to hardware (e.g., a processor, such as a central processing unit (CPU), graphics processing unit (GPU), an integrated circuit or other circuitry) or a combination of hardware and software (e.g., programming such as machine- or processor-executable instructions, commands, or code such as firmware, a device driver, programming, object code, etc. as stored on hardware). Hardware includes a hardware element with no software elements such as an application specific integrated circuit (ASIC), a Field Programmable Gate Array (FPGA), a PAL (programmable array logic), a PLA (programmable logic array), a PLD (programmable logic device), etc. A combination of hardware and software includes software hosted at hardware (e.g., a software module that is stored at a processor-readable memory such as random access memory (RAM), a hard-disk or solid-state drive, resistive memory, or optical media such as a digital versatile disc (DVD), and/or implemented or interpreted by a processor), or hardware and software hosted at hardware.

As depicted, the system 100 further comprises one or more memories 110-1, 110-2 (e.g., memories 110 and/or a memory 110) communicatively coupled with the computing device 102. A memory 110 may, as depicted, be provided in the form a database. The memories 110 may be separate from the computing device 102 (as depicted) and/or at least partially integrated into the computing device 102. Furthermore, while two memories 110 are depicted for convenience, the system 100 may comprise as few as one memory 110 (e.g., storing the depicted components distributed amongst the memories 110-1, 110-2), or any suitable number of memories 110.

The computing device 102 may comprise any suitable combination of one or more servers, one or more cloud computing devices, one or more personal computers, one or more laptops, and the like.

The client device 104 may comprise any suitable client device including, but not limited to a mobile device, a cell phone, a mobile phone, a tablet, a laptop, a personal computer, and the like. While only one client device 104 is depicted, the system 100 may comprise a plurality of client devices 104 (e.g., and respective operators 106 thereof) that may be communicatively coupled to the computing device 102.

The LLM engines 108 may be implemented by any suitable combination of one or more servers, one or more cloud computing devices, one or more personal computers, one or more laptops, and the like.

Furthermore, while the LLM engines 108 are depicted as separate components, the LLM engines 108 may be implemented at a same server and/or cloud computing device and/or personal computer and/or laptop, and/or one or more related servers, one or more related cloud computing devices, one or more related personal computers, one or more related laptops, and the like.

Furthermore, a given LLM engine 108 is understood to implement a respective large language model trained to provide output based on given inputs using, for example, any suitable set of training data.

Similarly, the computing device 102 may be combined with one or more of the LLM engines 108 and/or the computing device 102 may implement, or at least partially implement, one or more of the LLM engines 108.

Hence, an LLM engine 108 is understood to comprise any suitable combination of hardware and software for implementing a large language model, which may include an artificial neural network trained for (e.g., general-purpose) language generation and/or any other suitable natural language processing tasks. The LLM engines 108 may be trained for such functionality, for example in a training mode, using training data sets, such as text documents, that cause an LLM engine 108 to generate statistical relationships between nodes of an artificial neural network thereof, such that, in a use mode, and upon receipt of text input, the LLM engine 108 repeatedly predicts a next token or word in sentences output by the LLM engine 108. Hence, a large language model implemented by an LLM engine 108 may be a form of generative artificial intelligence.

Furthermore, the different LLM engines 108 may implement different LLMs.

The computing device 102 is communicatively coupled to the one or more LLM engines 108 and may, as depicted, be at least temporarily communicatively coupled to the client device 104 and/or other client devices 104 (not depicted).

For example, the computing device 102 may periodically provide messages to a client device 104, and/or a plurality of client devices 104, with certain respective results, as described herein.

Alternatively, or in addition, a client device 104 may initiate a search session with the computing device 102, for example, via a web browser, and/or any suitable application implemented at the client device 104, and the like, and the computing device 102 may host a browsing session and/or an application session with the client device 104 in which text input (e.g., such as a textual inquiry and/or question) is received at the computing device 102 from the client device 104. The computing device 102 may return results (e.g., responses) for the text input to the client device 104 as described herein. Indeed, the results may be provided in the form of a graphic user interface (GUI) provided at a display screen of the client device 104 at which text input is received, and at which textual results from the computing device 102 are provided. In these examples, the search session may be provided in the form a chat session in which the client device 104 is interacting with a chatbot (not depicted) as implemented by the computing device 102, or any other suitable device and/or engine (not depicted) in communication with the computing device 102.

As depicted, the first memory 110-1 stores identifiers 112-1...112-M (e.g., identifiers 112 and/or an identifier 112) in association with respective indicators of one or more associated subjects-of-interest (SOIs) 114-1...114-M (e.g., SOIs 114 and/or an SOI 114). The identifiers 112 are indicated via "ID" in FIG. 1.

Furthermore, association between components at the memories 110, such as the identifiers 112 and the SOIs 114, are shown in FIG. 1, and throughout the present specification, via dashed lines therebetween.

In general, a given identifier 112 may be associated with a given client device 104, and/or an associated account, and/or an associated operator 106 thereof, and/the like. However, a given identifier 112 may be comprise a temporary digital identifier (e.g., as a cookie identifier, and the like), that may be used to track activity at a website, and the like, accessed by a browser implemented the client device 104.

For example, a first identifier 112-1 may be associated with the client device 104 and/or the operator 106 thereof, and/or on-line activity thereof, and/or the operator 106 may operate the client device 104 (e.g., such as operating a browser and/or any other suitable application implemented by the client device 104) to log into an associated account to access the first identifier 112-1, and/or such that the computing device 102 may access the first identifier 112-1.

The first identifier 112-1 may comprise any suitable alphanumeric identifier and/or digital identifier, and may not include personally identifiable information (PII), and the like, of the operator 106.

Furthermore, an SOI 114 associated with a particular identifier 112 may comprise any suitable type of SOI that an associated operator 106 has interacted with and/or visited and/or provided some indication of preference for, in the past, as is next described.

In a particular example, the one or more SOIs 114-1 may indicate a list of one or more geographic locations (e.g., one or more countries, one or more states, one or more provinces, one or more cities, and the like) that the particular operator 106 has visited in the past, and/or for which the particular operator 106 has performed a search (e.g., via a browser, and the like) and/or for which the particular operator 106 has expressed a preference for, for example in a registration process with the computing device 102.

However, the SOIs 114 may comprise any suitable SOIs 114 and are not limited to geographic locations. For example, an SOI 114 may comprise a breed of dog, cat, and/or other type of pet, that an operator 106 may own and/or search for. Indeed, the SOIs 114 may comprise any suitable set of products and/or items, and the like, that an operator 106 may own (e.g., may have purchased) and/or searched for.

Hence, a combination of an identifier 112 and one or more associated SOIs 114 is understood to comprise historical data associated with a particular operator 106, and the one or more associated SOIs 114 may represent, in particular, preferences of the particular operator 106, for example for the one or more associated SOIs 114, that may be a subset of a larger set of SOIs 114.

Put another way, a given identifier 112 may be understood to be historically associated with one or more given SOIs 114.

For example, in addition to the SOIs 114 associated with the identifiers 112, the computing device 102 may have access to a larger list 116 of SOIs 114, of which the SOIs 114 associated with the identifiers 112 are subsets. For example, when the SOIs 114 associated with the identifiers 112 comprise geographic locations, the list 116 of SOIs 114 may comprise more geographic locations than represented by the SOIs 114 associated with the identifiers 112. Similarly, when the SOIs 114 associated with the identifiers 112 comprise breeds of dogs, the list 116 of SOIs 114 may comprise more breeds of dogs than represented by the SOIs 114 associated with the identifiers 112.

Furthermore, as depicted, the first memory 110-1 further stores a list of any suitable number categories 118-1,...118-P (e.g., the categories 118 and/or a category 118), for which associated descriptions of an SOI 114 may be generated, for example via one of the LLM engines 108.

For example, a category 118 may comprise a class of characteristics of the SOIs 114. For example, using the example of the SOIs 114 indicating geographic locations, different categories 118 of the geographic locations may include, but are not limited to, "art", "sports", "food", and the like, available at a geographic location. Similarly, and using the example of the SOIs 114 indicating breeds of dogs, different categories 118 of the breeds of dogs may include, but are not limited to, "size", "temperament", "typical medical characteristics", and the like, of a breed of dog.

In particular, a given category 118 is understood to comprise a class of characteristics of the SOIs 114, but not the specific characteristics themselves. Rather, it is understood that an LLM engine 108 may be used to generate such specific characteristics for a given category 118 and a given SOI 114, as described herein. Indeed, a combination of a given SOI 114, a given category 118 (and/or a plurality of given categories 118), and characteristics of the given category 118 for the given SOI 114 (and/or respective characteristics of the plurality of given categories 118) for the given SOI 114) may comprise a hierarchical data structure.

Furthermore, the categories 118 may be predetermined and provisioned at the first memory 110-1 by an administrator of the system 100, and/or the categories 118 may be determined by querying one or more of the LLM engines 108 for a list of such categories 118 that are most common for a type of the SOIs 114.

However, the list 116 of SOIs 114 may be determined based on SOIs associated with the computing device 102. For example, when the SOIs 114 indicate geographic locations, the computing device 102 may be associated with an entity that provides services associated with such geographic locations, such as flights to such geographic locations, tourist services at such geographic locations, and the like. Similarly, when the SOIs 114 indicate breeds of dogs, the computing device 102 may be associated with an entity that provides services associated with such breeds of dogs, such as providing and/or raising such breeds of dogs, information for such breeds of dogs, and the like.

A number of the SOIs 114 on the list 116 may be in the tens, hundreds, thousands, or higher. A number of categories 118 may be in the ten, hundreds or higher. The present specification includes any suitable number of SOIs 114 and categories 118.

Furthermore at least the number of the SOIs 114 may increase or decrease, for example as a number of geographic locations or dog breeds serviced by the aforementioned entities increases or decreases.

A number of categories 118 may also increase or decrease, for example based on input by an administrator of the system 100.

In general, the computing device 102 may be generally configured to initially use the one or more LLM engines 108 to generate associated text descriptions that describe, for the given categories 118, the plurality of SOIs 114 indicated by the list 116.

The computing device 102 may determine, for the given categories 118, respective similarity scores between pairs of the plurality of SOIs 114, by comparing the associated text descriptions for the given categories 118 of the plurality of SOIs 114.

For example, as depicted, the computing device 102 may comprise a similarity score engine 120 that may receive as input, a pair of SOIs 114, respective text descriptions of the pair of SOIs 114 for a given category 118, and output a similarity score therebetween.

Using the example of the SOIs 114 indicating geographic locations, respective text descriptions of a given category 118 of "food" may be generated for the SOIs 114 using one or more of the LLM engines 108, and, for a pair of the SOIs 114, a pair of such respective text descriptions of "food" for the pair of the SOIs 114 may be input to the similarity score engine 120. The similarity score engine 120 may output a score between "0" and "100" indicative of similarity of such respective text descriptions of "food" for the pair of the SOIs 114, with a score of 0 indicating no similarity and/or a minimum in similarity, and a score of 100 indicating perfect similarity and/or a maximum in similarity (though any suitable scale is within the scope of the present specification). The similarity score engine 120 may generate such a similarity score by comparing words, orders of words, and the like, of a pair of respective text descriptions. In particular examples, the similarity score engine 120 may implement one or more of a semantic comparison algorithm and a term frequency-inverse document frequency algorithm to determine the similarity scores.

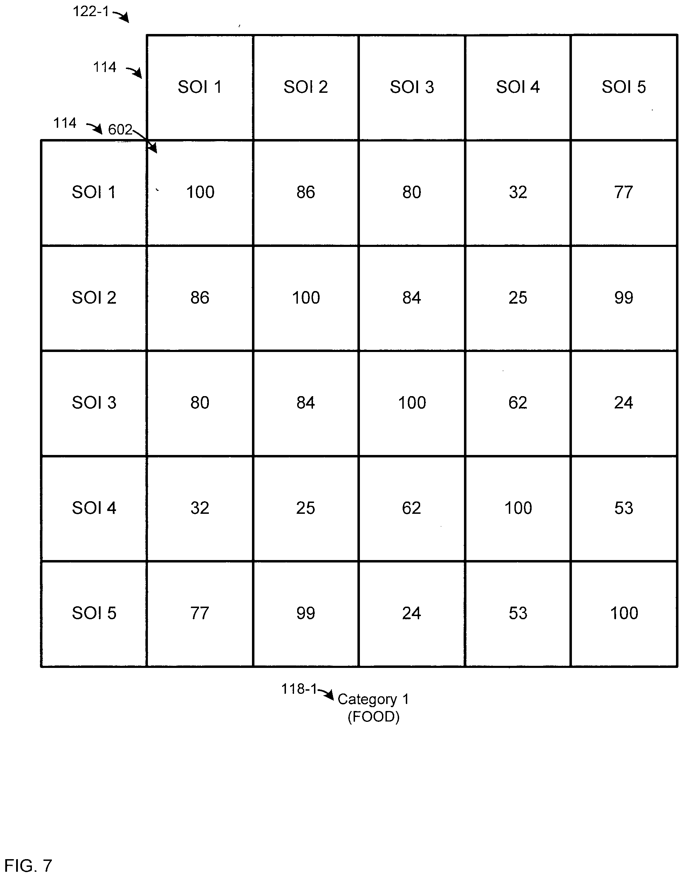

As depicted, the computing device may populate the second memory 110-2 with a plurality of matrices 122-1... 122-P (e.g., matrices 122 and/or a matrix 122) on a one-to-one basis with the categories 118 (e.g., one matrix 122 for each category 118), a given matrix 122 for a given category 118 comprising the indications of the SOIs 114 of the list 116 arranged along an upper row, and the like, and along a left most column, and the like, with similarity scores between respective text descriptions of pairs of SOIs 114, for the given category 118, arranges at intersections of rows and columns associated with the SOIs 114. As depicted, at the matrices 122, similarity scores are schematically represented by squares arranged in rows and columns, however examples of such matrices 122 are described in further detail with respect to FIG. 7, FIG. 8 and FIG. 9.

In particular, the similarity scores between a given SOI 114 and other SOIs 114 may be determined as vectors (e.g., a row or a column of a matrix 122 may comprise a vector), and a matrix 122 may be constructed from such vectors.

However, the similarity scores may be stored in any suitable manner, and it is understood that the matrices 122 are but one example of a data structure for storing such similarity scores in association with pairs of SOIs 114 for given categories 118. Alternatively, or in addition, the similarity scores associated with pairs of SOIs 114 for given categories 118 may be stored as the aforementioned vectors without being arranged in matrices 122. Alternatively, or in addition, the similarity scores associated with pairs of SOIs 114 for given categories 118 may be stored in a database format, without being arranged in vectors and/or matrices.

While the similarity scores may be periodically updated using the one or more LLM engines 108, once the similarity scores are generated and stored, use of the one or more LLM engines 108 may at least temporarily end, and certain results may be provided to the client device 104, in a message, or in a chat session, and the like, based on the similarity scores. For example, given a text input from the computing device 102 an/or a client device 104 as to what SOIs 114 on the list 116 may be similar to SOIs 114 associated with a given identifier 112, rather than use an LLM engine 108 to generate a result, the matrices 122 of the similarity scores may be used to generate a result, which is both computationally simpler than using an LLM engine 108 (e.g., more sustainable), more explainable then using an LLM engine 108 (e.g., to explain how a result was generated), and obviates use of information in a given identifier 112 in generating a result.

For example, the computing device 102 may, for a given identifier 112 with an historical association with one or more given SOIs 114, of the plurality of SOIs 114 (e.g., as represented by the list 116), compare, for the given categories 118, the respective similarity scores between the one or more given SOIs 114 associated with the given identifier 112, with other similarity scores between the one or more given SOIs 114 and remaining SOIs 114 of the plurality of SOIs 114.

In performing such a comparison, the computing device 102 may select, for one or more of the given categories 118, one or more of the remaining SOIs 114 having associated similarity scores with the one or more given SOIs 114 associated with the given identifier 112, closest to the respective similarity scores between the one or more given SOIs 114 associated with the given identifier 112, or having highest similarity scores with the one or more given SOIs 114. The computing device 102 may output one or more respective indicators of the one or more of the remaining SOIs 114, as selected, to the client device 104 associated with the given identifier 112.

The matrices 122 may further be used to select the one or more given categories 118 for which to perform the comparison. In one particular example, selecting a given number of the given categories 118 may be based on similarity scores between three or more SOI 114 (e.g., associated with an identifier 112) occur by selecting one or more categories 118 having highest respective similarity scores between the three or more given SOIs 114. Such a selection may be based on average similarity scores between the three or more given SOIs 114, that may be determined for each of the categories 118 using the matrices 122, as explained in further detail below.

In particular examples, a given category 118 may be removed from the given categories 118 (e.g., thereby reducing the number of given categories 118), when a corresponding matrix 122 includes no similarity scores that are above a threshold similarity score (e.g., 50, 55, 60, 75, amongst other possibilities), indicating that no pair of SOIs 114 are similar with respect to the given category 118. Such a reduction in the number of given categories 118 may later reduce processing time to regenerate the matrices 122, and the like, when a number of the SOIs 114 change.

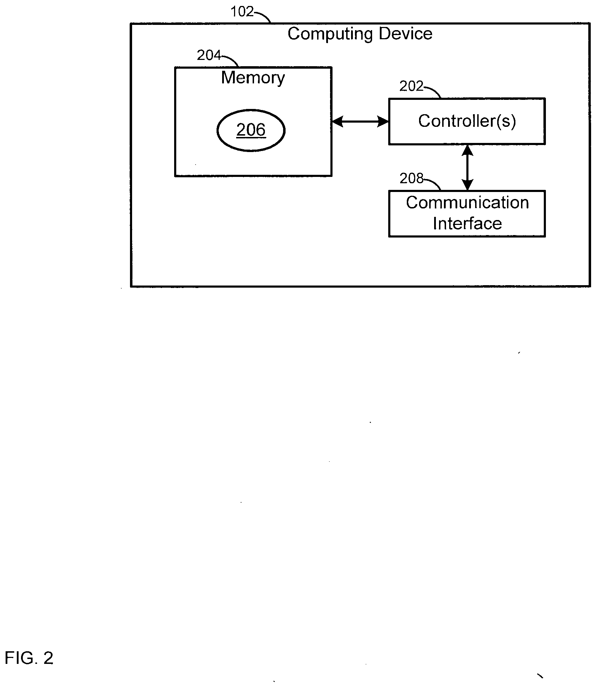

Turning to FIG. 2, before discussing the functionality of the system 100 in greater detail, certain components of the computing device 102 will be described. While depicted as one device, the computing device 102 may comprise one or more computing devices and/or one or more cloud computing devices that may be geographically distributed.

As shown in FIG. 2, the computing device 102 includes at least one controller 202, such as a central processing unit (CPU) or the like. The controller 202 is interconnected with a memory 204 storing an application 206, the memory 204 implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The controller 202 and the memory 204 are generally comprised of one or more integrated circuits (ICs).

The controller 202 is also interconnected with a communication interface 208, which enables the computing device 102 to communicate with the other components of the system 100, though it is understood such communication may occur locally when components of the system 100 are combined. The communication interface 208 therefore may include any necessary components (e.g., network interface controllers (NICs), radio units, and the like) to communicate with components of the system 100. The specific components of the communication interface 208 may be selected based on upon a nature of one or more networks that the components of the system 100 use to communicate, and/or local communication between components of the system 100, and the like. The computing device 102 may also include input and output devices connected to the controller 202, such as keyboards, pointing devices, display screens, and the like (not shown).

The components of the computing device 102 mentioned above may be deployed in a single enclosure, or in a distributed format. In some examples, therefore, the computing device 102 includes a plurality of processors, either sharing the memory 204 and communication interface 208, or each having distinct associated memories and communication interfaces. As such, it is understood that the memory 204, and/or a portion of the memory 204, may be internal (e.g., as depicted) or external to the computing device 102; regardless, the controller 202 is understood to have access to the memory 204.

Furthermore the application 206 may comprise computer-readable programming instructions, executable by the controller 202.

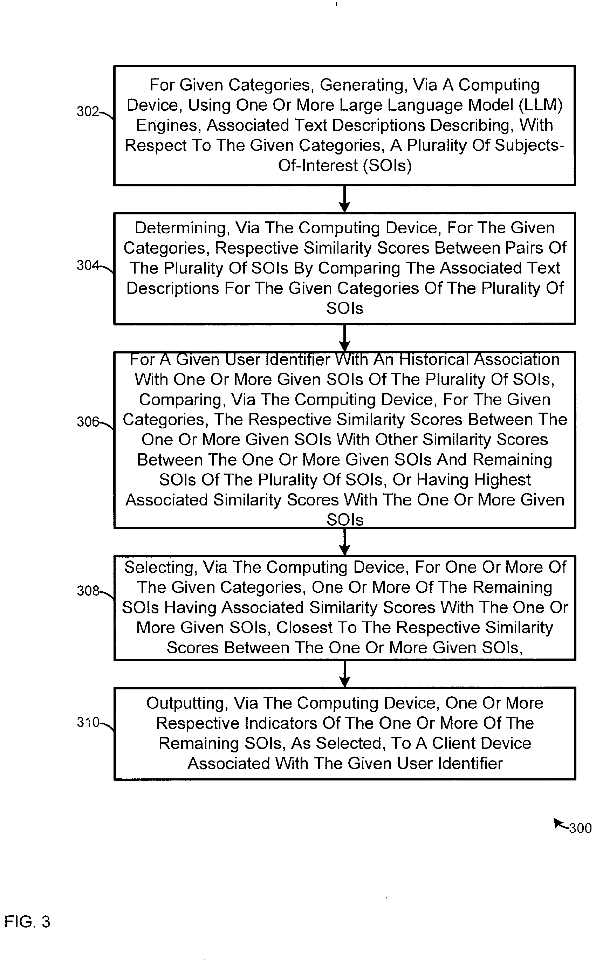

As will be understood by those skilled in the art, the controller 202 executes the instructions of the application 206 in order to perform a set of operations defined by the instructions contained therein including, but not limited to, the blocks of a method described with respect to FIG. 3. In the description below, the controller 202, and more generally the computing device 102, are understood to be configured to perform those actions. It will be understood that they are so configured via the execution (by the controller 202) of the instructions of the application stored in the memory 204. Put another way, the computing device 102 may comprise a computer-readable storage medium (e.g., a non-transitory computer-readable storage medium, such as the memory 204) having stored thereon program instructions that, when executed by the controller 202, causes the controller 202 to perform a set of operations comprising the blocks of the method described with respect to FIG. 3.

While structure of the client device 104, and the LLM engines 108 are not described in detail, the client device 104 and the LLM engines 108 are understood to have a similar structure as the computing device 102, but adapted for respective functionality of the client device 104, and the LLM engines 108.

For example, the client device 104 may comprise any suitable combination of input and output devices such as a display screen, a touch screen, a keyboard, a pointing device, and the like.

An LLM engine 108 is understood to include one or more respective applications for implementing, via one or more respective controllers, and the like, functionality described herein, and in particular any suitable LLM and/or LLM application.

Attention is now directed to FIG. 3 which depicts a flowchart representative of a method 300 a method for reducing large language model engine usage for sustainable result generation. The operations of the method 300 of FIG. 3 correspond to machine readable instructions that are executed by the computing device 102, and specifically the controller 202 of the computing device 102. In the illustrated example, the instructions represented by the blocks of FIG. 3 are stored at the memory 204 for example, as the application 206. The method 300 of FIG. 3 is one way in which the system 100 and/or the computing device 102 may be configured. Furthermore, the following discussion of the method 300 of FIG. 3 will lead to a further understanding of the system 100, and its various components.

The method 300 of FIG. 3 need not be performed in the exact sequence as shown and likewise various blocks may be performed in parallel rather than in sequence. Accordingly, the elements of method 300 are referred to herein as "blocks" rather than "steps." The method 300 of FIG. 3 may be implemented on variations of the system 100 of, as well.

At a block 302, the controller 202, and/or the computing device 102, for given categories 118, generates, using one or more of the LLM engines 108, associated text descriptions describing, with respect to the given categories 118, a plurality of SOIs 114.

For example, for a given SOI 114, a given category 118 and a given LLM engine 108, the controller 202, and/or the computing device 102 may generate input to the given LLM engine 108 that combines the given SOI 114 and the given category 118, and the LLM engine 108 may return a respective text description.

Furthermore, such text descriptions may be stored at one or more of the memories 110, such as with the matrices 122 at the memory 110-2.

At a block 304, the controller 202, and/or the computing device 102, determines, for the given categories 118, respective similarity scores between pairs of the plurality of SOIs 114 by comparing the associated text descriptions for the given categories 118 of the plurality of SOIs 114.

In a particular example, comparing the associated text descriptions for the given categories 118 of the plurality of SOIs 114 may occur using one or more of a semantic comparison algorithm and a term frequency-inverse document frequency algorithm, implemented by the similarity score engine 120.

At a block 306, the controller 202, and/or the computing device 102, for a given identifier 112 with an historical association with one or more given SOIs 114 of the plurality of SOIs 114, compares, for the given categories 118, the respective similarity scores between the one or more given SOIs 114 with other similarity scores between the one or more given SOIs 114 and remaining SOIs 114 of the plurality of SOIs 114.

At a block 308, the controller 202, and/or the computing device 102, selects, for one or more of the given categories 118, one or more of the remaining SOIs 114 having associated similarity scores with the one or more given SOIs 114, closest to the respective similarity scores between the one or more given SOIs 114, or having highest associated similarity scores with the one or more given SOIs.

In particular, selecting of the one or more of the remaining SOIs 114 is understood to occur without further use of the one or more LLM engines 108.

It is furthermore understood that the block 308 defines criteria for selecting one or more of the remaining SOIs 114 using the similarity scores of the block 304, and without using the one or more LLM engines 108.

At a block 310, the controller 202, and/or the computing device 102, outputs (e.g., via the communication interface 208), one or more respective indicators of the one or more of the remaining SOIs 114, as selected, to a client device 104 associated with the given identifier 112.

For example, the one or more respective indicators may indicate an identifier (e.g., a name, and the like) of the remaining SOIs 114 that were selected, as well as the given categories 118 used for the selection.

In yet further examples, the one or more respective indicators may include the text descriptions of the remaining SOIs 114 for the given categories 118, as generated at the block 302.

Furthermore, generating the associated text descriptions using the one or more LLM engines 108, at the block 302, is understood to use at least one of more processing power and more energy than comparing, at the block 306, for the given categories 118, the respective similarity scores between the one or more given SOIs 114 with the other similarity scores between the one or more given SOIs 114 and the remaining SOIs 114 of the plurality of SOIs 114. Put another way, as the comparing of the block 306 is used to select the one or more of the remaining SOIs 114 for which the one or more respective indicators are output at the block 310, for example as results of SOIs 114 that are similar to SOIs 114 presently associated with an associated identifier 112, such selection of the remaining SOIs 114 is understood to be more sustainable as compared to when the one or more LLM engines 108 are used to select such remaining SOIs 114.

Furthermore, such selection is understood to be more explainable due to the use of similarity scores indicating that text descriptions are similar, as compared to when the one or more LLM engines 108 are used to select such remaining SOIs 114.

Furthermore, such selection is understood to be performed without use of PII associated with the operator 106.

The method 300 may include other features.

For example, as a number of historical associations between a given identifier 112, and the one or more given SOIs 114 of the plurality of SOIs 114 increases, the controller 202 and/or the computing device 102 may repeat the comparing of the respective similarity scores of the block 306, the selecting of the more of the remaining SOIs 114 of the block 308, and the outputting of the block 310, but without repeating generating of the associated text descriptions and determining of the respective similarity scores of the block 302 and the block 304.

For example, the operator 106 of the client device 104 may travel to more geographic locations, and the SOIs 114 associated with the given identifier 112-1 of the operator 106 may increase. As the number of the SOIs 114 associated with the given identifier 112-1 of the operator 106 increases, the blocks 306, 308, 310 may be repeated such that the client device 104 is again provided with remaining SOIs 114 of the list 116 that are similar to the SOIs 114 associated with the given identifier 112-1. Such a repetition of the blocks 306, 308, 310 may occur periodically, and/or when the SOIs 114 associated with the given identifier 112-1 of the operator 106 increases by a given number (e.g., such as 1, 2, 3, amongst other possibilities), and/or on demand by the client device 104 (e.g., when a chat session occurs between the computing device 102 and the client device 104)

In some examples, the method 300 may further comprise, the controller 202 and/or the computing device 102: generating the associated text descriptions (e.g., at the block 302) using a plurality of the LLM engines 108, such that a plurality of the associated text descriptions are generated for each combination of a respective category 118 and a respective SOI 114; selecting one respective associated text description from the plurality of the associated text descriptions for each combination of the respective category 118 and the respective SOI 114; and using the one respective associated text description when comparing the associated text descriptions for the given categories 118 of the plurality of SOIs 114.

For example, while at the block 302 the controller 202 and/or the computing device 102 may query only one of the LLM engines 108, and receive only one text description, in other examples, the controller 202 and/or the computing device 102 may query two or more of the LLM engines 108 and receive two or more text descriptions (e.g., a same number of text descriptions as the number of LLM engines 108 that are queried), and select one of the two or more text descriptions that is used to generate the aforementioned similarity scores.

For example, when two or more text descriptions are generated (e.g., that describe the same category 118 for a given SOI 114), at the block 302, the controller 202 and/or the computing device 102 may perform any suitable cross-verification process, including, but not limited to, semantic embedding, to compare the two or more text descriptions, for example to determine similarities therebetween (e.g., via respective similarity scores, that may also be generated using the similarity score engine 120) and to attempt to find at least two of the text descriptions that are about the same or similar. For example, determinations of similarity may be threshold based, such that when similarity scores between two or more of the text descriptions are above a threshold (e.g., such as 80, 85, 90, amongst other possibilities), the controller 202 and/or the computing device 102 may choose one of the two or more of the text descriptions that are similar in any suitable manner (e.g., randomly) and use the selected text description to later determine similarity scores between pairs of the plurality of SOTs 114 at the block 304.

In examples where none of the two or more text descriptions are about the same or similar (e.g., when similarity scores therebetween are below the aforementioned threshold), the controller 202 and/or the computing device 102 may discard the text descriptions and exclude the associated category 118 from the remaining blocks of the method 300.

In some examples, the given identifier 112 of the block 306 may be associated with only one SOI 114. In some of these examples, the controller 202 and/or the computing device 102 may skip the comparison of the block 306, and the selection of the block 308, and process the SOIs 114 associated with the identifiers 112 and/or the controller 202 and/or the computing device 102 to determine SOIs 114 that have highest instances of association with the identifiers 112. For example, such SOIs 114 that have highest instances of association with the identifiers 112 may be indicative of popular SOIs 114. A one or more "most popular" SOIs 114 (e.g., one or more SOIs 114 that have highest instances of association with the identifiers 112) may be output at the block 310.

However, in other examples, when the given identifier 112 of the block 306 is historically associated with only one SOI 114, the controller 202 and/or the computing device 102 may use the similarity scores determined at the block 304 to determine, for the given categories 118, at least one remaining SOI 114 of the list 116 that is similar to the one SOI 114 associated with the given identifier 112, and select the at least one remaining SOI 114 of the list 116 at the block 308.

However, in other examples, the given identifier 112 of the block 306 may be historically associated with two or more given SOIs 114, and the method 300 may further comprise the controller 202 and/or the computing device 102: selecting a given number of the given categories 118 having highest respective similarity scores between the two or more given SOIs 114; and performing the comparing (e.g., of the block 306) of the respective similarity scores by comparing, for only the given number of the given categories 118, the respective similarity scores between the two or more given SOIs 114 with the other similarity scores between the two or more given SOIs 114 and the remaining SOIs 114 of the plurality of SOIs 114, such that the selecting (e.g., of the block 308) of the one or more of the remaining SOIs 114 occurs only for the given categories 118.

For example, using the matrices 122, and a given number of given categories 118 (e.g., such as two categories 118, three categories 118, four categories 118, amongst other possibilities, and such a given number of categories 118 may be predetermined), the controller 202 and/or the computing device 102 may select only the given number of the matrices 122 for respective categories 118 having highest respective similarity scores between the two or more given SOIs 114. Using a specific example of a given number of two, the controller 202 and/or the computing device 102 may select two matrices 122 for two respective categories 118 having highest respective similarity scores between the two or more given SOIs 114 associated with a given identifier, and perform the comparison of the block 306, and the selection of the block 308 based only on the two matrices 122 selected for the two respective categories 118. For example, a remaining SOI 114 may be selected for each of the two categories 118, and an indication thereof may be output at the block 310 (e.g., the indication may indicate the two remaining SOIs 114 and the corresponding two categories 118).

In yet further examples, where the given identifier 112 of the block 306 is historically associated with two or more given SOIs 114, the method 300 may further comprise the controller 202 and/or the computing device 102: selecting a given number of the given categories 118, having highest respective similarity scores between the two or more given SOIs 114; for a given category 118 of the given number of the given categories 118, combining the respective similarity scores between the two or more given SOIs 114 and the remaining SOIs 114 of the plurality of SOIs 114 to generate combined respective similarly scores between the two or more given SOIs 114 and the remaining SOIs 114; and for the given category 118, selecting (e.g., at the block 308) the one or more of the remaining SOIs 114 having associated combined respective similarity scores, with the two or more given SOIs 114, closest to combined similarity scores between the two or more given SOIs 114, or having highest combined similarity scores with the one or more given SOIs 114, such that one or more of the remaining SOIs 114 are selected (e.g., at the block 308), and the one or more respective indicators thereof are output (e.g., at the block 310) to the client device 104, on a per category 118 basis.

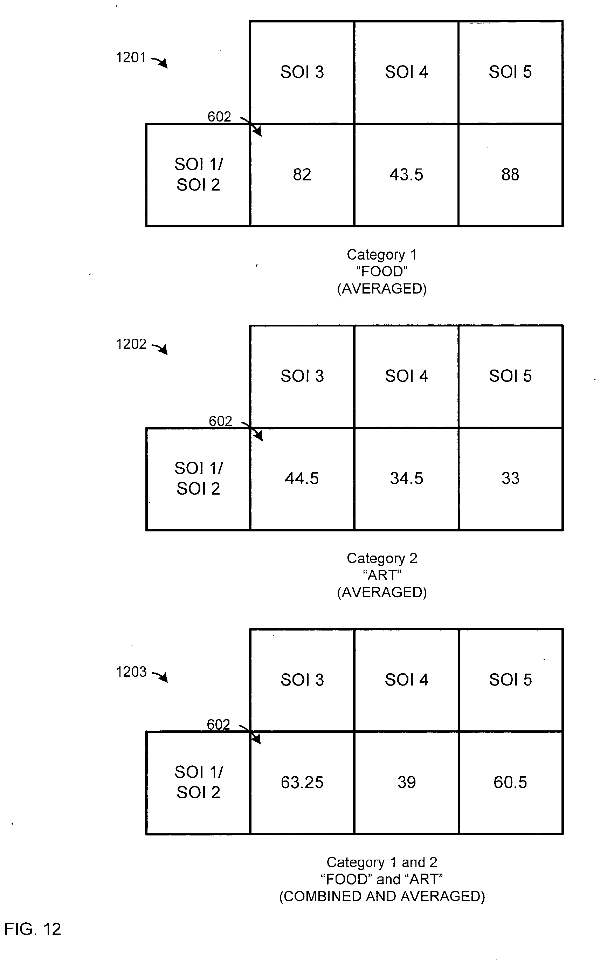

For example, at, or prior, to the block 306, the controller 202 and/or the computing device 102 may average respective similarity scores between the SOIs 114 associated with the given identifier 112 of the block 306, and the remaining SOIs 114, for a given category 118. For example, when two SOIs 114 are associated with a given identifier 112, for a given remaining SOI 114, an average of the similarity scores between the two SOIs 114 and the given remaining SOI 114 may be determined, and such an averaging may occur for each of the remaining SOIs 114. In this example, the selection of one or more remaining SOIs 114 may occur on the basis of highest averaged similarity scores. An example of such averaging is depicted in FIG. 12.

In yet further examples, where the given identifier 112 of the block 306 is historically associated with two or more given SOIs 114, the method 300 may further comprise the controller 202 and/or the computing device 102: selecting a given number of the given categories 118, having highest respective similarity scores between the two or more given SOIs 114; for all of the given number of the given categories 118, combining the respective similarity scores between the two or more given SOIs 114 and the remaining SOIs 114 of the plurality of SOIs 114 to generate combined respective similarly scores between the two or more given SOIs 114 and the remaining SOIs 114 ; and selecting the one or more of the remaining SOIs 114 having associated combined respective similarity scores with the two or more given SOIs 114 closest to combined similarity scores between the two or more given SOIs 114, or having highest combined similarity scores with the one or more given SOIs 114, such that one or more of the remaining SOIs 114 are selected, and output to the client device, on a basis of combined categories 118.

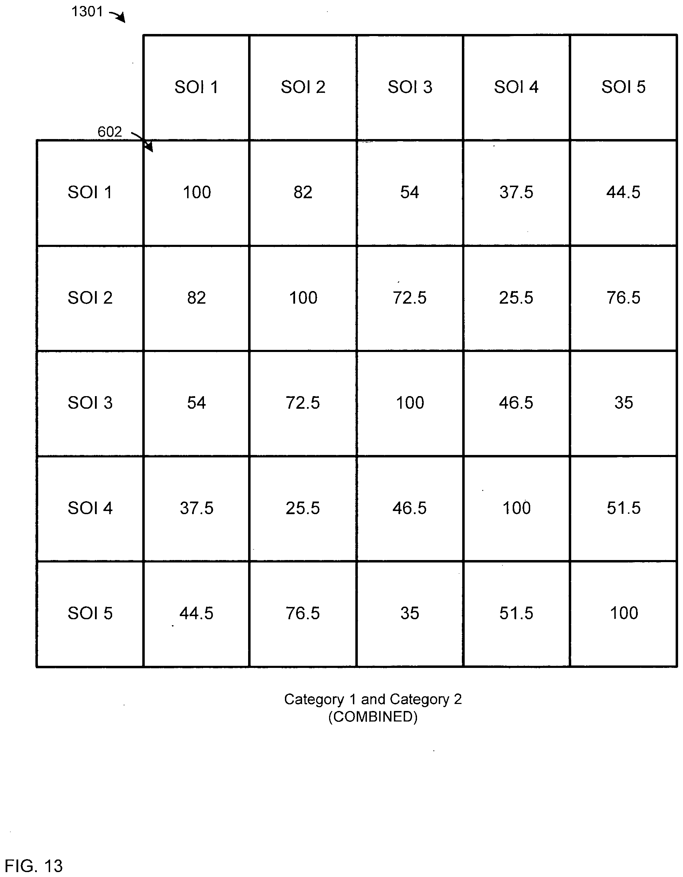

For example, rather than base a selection of the remaining SOIs 114 on only individual categories 118, the controller 202 and/or the computing device 102 may average the similarity scores between the SOIs 114 (e.g., associated with the given identifier 112 of the block 306) and the remaining SOIs 114 across the given number of the given categories 118. An example of such combining is depicted in FIG. 13.

However, a number of the given categories 118 that are selected may be based on any suitable scheme. For example, where the given identifier 112 of the block 306 is historically associated with two or more given SOIs 114, the method 300 may further comprise the controller 202 and/or the computing device 102: selecting a number of the given categories 118, having respective similarity scores between the two or more given SOIs 114 that are above a threshold similarity score; for all of the number of the given categories 118 having respective similarity scores between the two or more given SOIs 114 that are above a threshold similarity score, the method 300 may be implemented according to any of the aforementioned schemes based on combining, averaging, and the like. A threshold similarity score, in these examples, may be 65, 70, 75, amongst other possibilities.

In yet further examples, where the given identifier 112 of the block 306 is historically associated with two or more given SOIs 114, and the respective similarity scores between the pairs of the plurality of SOIs 114 are determined in the form of vectors, the method 300 may further comprise the controller 202 and/or the computing device 102: selecting a given number of the given categories 118, having highest respective similarity scores between the two or more given SOIs 114; averaging respective vectors of the respective similarity scores between the two or more given SOIs 114 and the remaining SOIs 114; and selecting, for the one or more of the given categories 118, one or more of the remaining SOIs 114 having associated similarity scores with the one or more given SOIs 114 using at least one averaged vector.

Put another way, averaging of vectors represented by the matrices 122 may occur to determine the aforementioned averaged similarity scores, and/or the aforementioned averaged similarity scores may be determined individually, without averaging vectors.

Furthermore, in any of the above schemes for selecting a number of the given categories 118, average similarity scores between three or more of the SOIs 114 associated with an identifier 112, may be used to select the number of the given categories. For example, with reference to the matrices 122 of FIG. 7, FIG. 8 and FIG. 9, and assuming that an identifier 112 is associated with the SOIs 114 of "SOI1", "SOI2", and "SOI3", average similarity scores between the SOIs 114 of "SOI1 ", "SOI2", and "SOI3" from the matrices 122-1, 122-2, 122-3 are, respectively: "83.3", "55.7", and "60" (e.g., respectively determined from averages of sets of similarity scores of ["86", "80", "84"], ["78", "28", "61"], and ["27", "83", "73"]).

In examples where one given category 118 is selected, the category 118-1 of "FOOD" may be selected as the average similarity scores between the SOIs 114 of "SOI1", "SOI2", and "SOI3" is highest for the category 118-1 of "FOOD".

Similarly, in examples where two given categories 118 are selected, the categories 118-1, 118-3 of "FOOD" and "SPORTS" may be selected as two highest average similarity scores between the SOIs 114 of "SOI1 ", "SOI2", and "SOI3" are for the category 118-1 of "FOOD", and the category 118-3 of "SPORTS".

However thresholding may be used to limit the number of categories 118 such that when a threshold similarity score of "75" is used, the category 118-3 of "SPORTS" may be excluded from selection as the average similarity score of "60" is not above such a threshold similarity score.

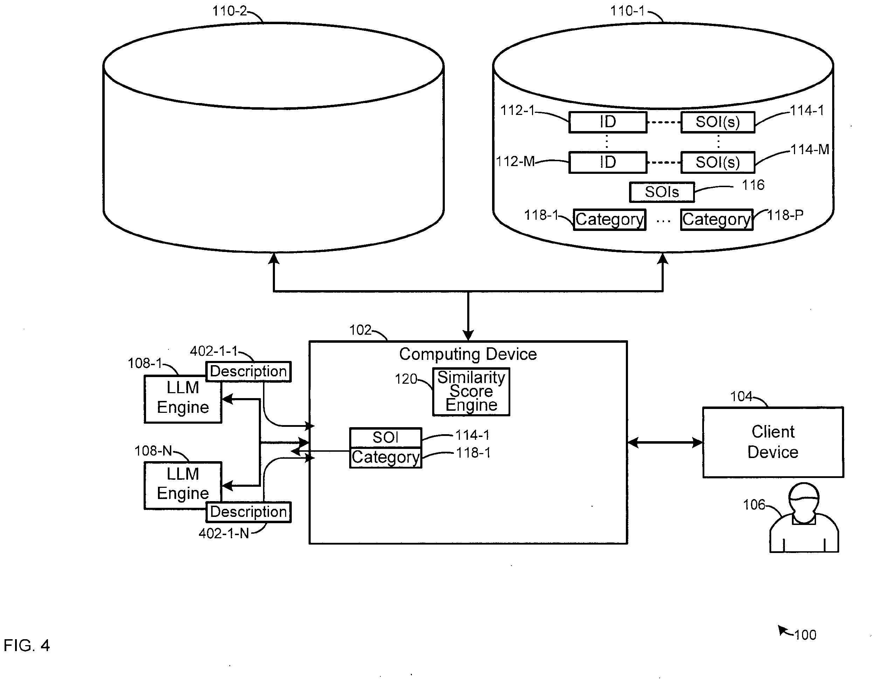

Attention is next directed to FIG. 4, FIG. 5, FIG. 6, FIG. 7, FIG. 8, FIG. 9, FIG. 10, FIG. 11, FIG. 12, FIG. 13 and FIG. 13, which depict examples of the method 300. FIG. 4, FIG. 5, FIG. 6, FIG. 10, FIG. 11 and FIG. 14 are substantially similar to FIG. 1, with like components having like numbers. FIG. 7, FIG. 8, and FIG. 9 depict example matrices 122. FIG. 12 and FIG. 13 depict examples of averaging and/or combining similarity scores and/or the matrices 122.

Attention is first directed to FIG. 4, which depicts the system 100 prior to the similarity scores of the matrices 122 being generated. As depicted in FIG. 4, the computing device 102 provides an indication of a given SOI 114-1, and a first given category 118-1 (e.g., retrieved from the first memory 110-1), to the LLM engines 108, and the LLM engines 108 return respective text descriptions 402-1-1...402-1-N thereof. While the given SOI 114-1 is depicted as being associated with the first identifier 112-1, it is understood that the given SOI 114-1 is also on the list 116 of SOIs 114, and that the computing device 102 may retrieve the indication of the given SOI 114-1 from the list 116 (e.g., rather than from the indication of the given SOI 114-1 associated with the first identifier 112-1).

Hereafter, the respective text descriptions 402-1-1...402-1-N that are particular to the combination of the indication of the given SOI 114-1, and the first given category 118-1 are interchangeably referred as the text descriptions 402-1 and/or a text description 402-1. However, text descriptions for different combinations of indications of the SOIs 114 and the given categories 118 are generically referred to as the text descriptions 402 and/or a text description 402.

In particular, the respective text descriptions 402-1 are understood to comprise respective text descriptions of the given SOI 114-1 with respect to the first given category 118-1. For example, when the given SOI 114-1 is indicative of a given city "CITY1", and the first given category 118-1 is "Food", an indication of the given SOI 114-1, and the first given category 118-1 may comprise "Generate a text description of Food available in CITY1" that is provided to the LLM engines 108, which may reach return respective text descriptions 402-1-1...402-1-N, such as "CITY1 is known for Burrata" (e.g., from one LLM engine 108), or "When in CITY1, try the Burrata" (e.g., from another LLM engine 108), and the like.

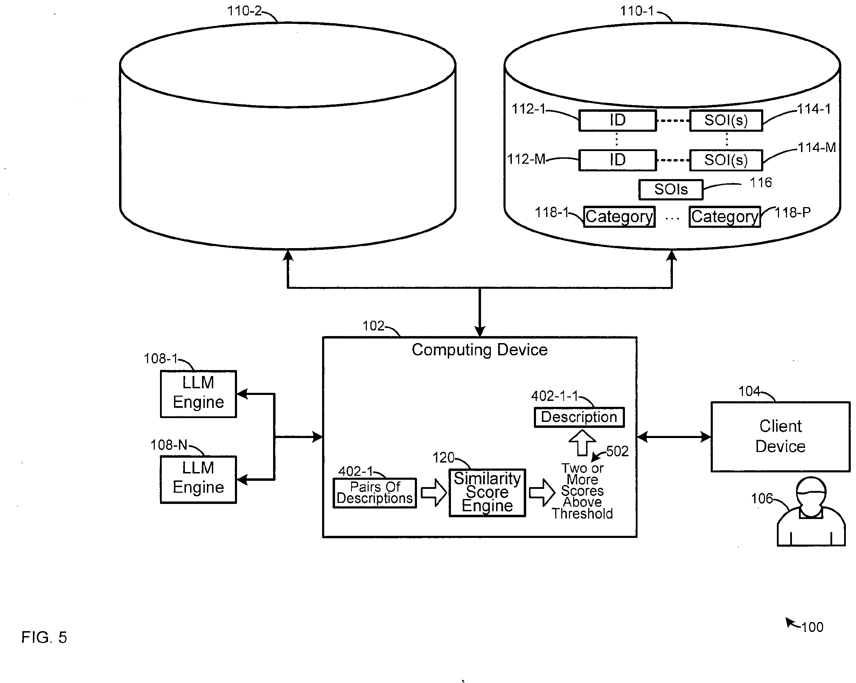

Attention is next directed to FIG. 5, which depicts the computing device 102 comparing the text descriptions 402-1 by inputting pairs of the text descriptions 402-1 to the similarity score engine 120, which outputs similarity scores (not depicted) therebetween. However, from the outputs from the similarity score engine 120, the computing device 102 may determine 502 that two or more of the text descriptions 402-1 are similar, for example, by determining that least one similarity score of a pair of the text descriptions 402-1, are above a threshold. As depicted, the computing device 102 selects one of the text descriptions 402-1, and in particular the text description 402-1-1 (e.g., "CITY1 is known for Burrata"), for use in determining respective similarity scores between pairs of the plurality of SOIs 114 by comparing the associated text descriptions 402 for the given categories 118 of the plurality of SOIs 114.

Indeed, it is understood that at least FIG. 4 is an example of the block 302 of the method 300.

It is furthermore hereafter understood that the computing device 102 may repeat the process depicted in FIG. 4 and FIG. 5 for combinations of the SOIs 114 (e.g., for each pair of SOIs 114 on the list 116), and the given categories 118.

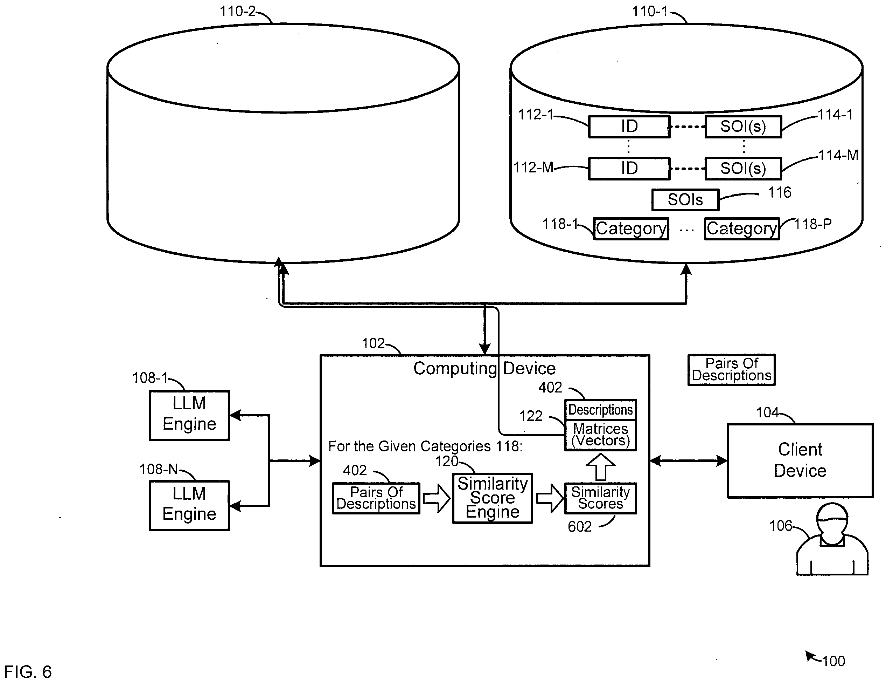

Attention is next directed to FIG. 6, which depicts the computing device 102 determining (e.g., at the block 304 of the method 300), for the given categories 118, respective similarity scores 602 between pairs of the plurality of SOIs 114 by comparing pairs of the associated text descriptions 402 for the given categories 118 of the plurality of SOIs 114.

For example, for a given category 118, pairs of text descriptions 402 of the different SOIs 114 are input to the similarity score engine 120, which generates respective similarity scores, which may be assembled, by the computing device 102, into the matrices 122, and, as depicted, stored at the second memory 110-2. For example, for a given category 118 of "Food", for an SOI 114 of a "CITY1", an associated text description 402 of "CITY1 is known for Burrata", may be compared to an associated text description 402 of "People visit CITY2 to try the Burrata and other types of cheese" for another SOI 114 of "CITY2", and an associated similarity score of "86" may be generated.

As depicted, the text descriptions 402 may also be provided to, and stored at the second memory 110-2 for example stored in association respective SOI 114 and categories 118.

Attention is next directed to FIG. 7, which depicts an example of a first matrix 122-1 for a first given category 118-1, such as "FOOD" (e.g., as depicted), presuming that the SOIs 114 are cities, or any other suitable geographic location. The example of FIG. 7 further assumes that there are five indications of SOIs 114, labelled "SOI 1", SOI 2", "SOI 3", "SOI 4" and "SOI 5" in FIG. 7. Continuuing with the above example, "SOI 1" may be "CITY1", "SOI 2" may be "CITY2", "SOI 3" may be "CITY3", etc.

As depicted, each row (e.g., a row vector) of the first matrix 122-1 corresponds to a given SOI 114, and each column (e.g., a column vector) of the first matrix 122-1 also corresponds to a given SOI 114, and an intersection between a given row and a given column correspond to respective similarity score 602 (e.g., on a scale of 0 to 100) between respective SOIs 114 of the given row and the given column.

Hence, it is understood that when a row and a column for a same given SOI 114 intersect, a respective similarity score 602 is "100". Such respective similarity scores 602 of 100 for a same given SOI 114 may be determined by the similarity score engine 120, or such respective similarity scores 602 of 100 may be assigned by the computing device 102 without inputting a pair of the same text descriptions 402 for a same given SOI 114 for a given category 118 into the similarity score engine 120.

However, it is understood that when a row and a column for different given SOI 114 intersect, a respective similarity score 602 is as determined by the similarity score engine 120. For example, a similarity score 602 between the SOIs 114 of "SOI 1" and "SOI 2", for the first given category 118-1 is "86" as indicated in both the first and second rows of the first matrix 122-1 where the respective rows and columns for the SOI 114 "SOI 1" and "SOI 2" intersect.

It is furthermore understood that for the SOI 114 of "SOI 1", as the similarity score 602 of "86" between the SOIs 114 of "SOI 1" and "SOI 2" is the highest similarity score 602 in the first row and/or the first column, the SOI 114 of "SOI 2" is most similar to the SOI 114 of "SOI 1" with respect to the first given category 118-1 of "FOOD".

Similarly, for the SOI 114 of "SOI 1", as the similarity score 602 of "32" between the SOIs 114 of "SOI 1" and "SOI 4" is the lowest similarity score 602 in the first row and/or the first column, the SOI 114 of "SOI 4" is least similar to the SOI 114 of "SOI 1" with respect to the first given category 118-1 of "FOOD".

Similarly, for the SOI 114 of "SOI 2", as the similarity score 602 of "99" between the SOIs 114 of "SOI 1" and "SOI 5" is the highest similarity score 602 in the second row and/or the second column, the SOI 114 of "SOI 5" is most similar to the SOI 114 of "SOI 2" with respect to the first given category 118-1 of "FOOD".

Similar determinations may occur for each intersection of a row and column, and the like, for given pairs of the SOIs 114, and for the first given category 118-1 of "FOOD".

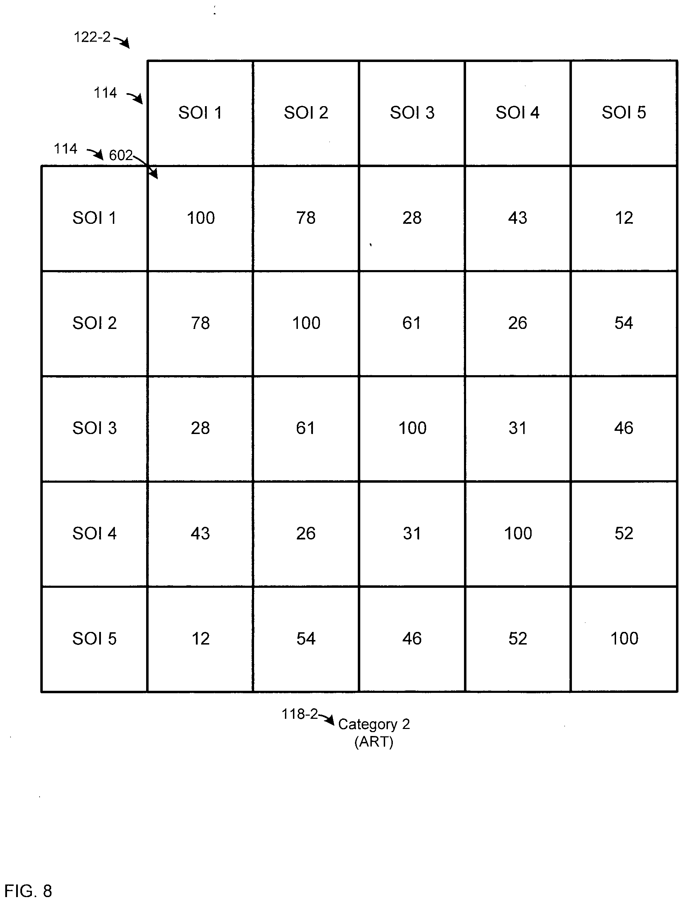

Attention is next directed to FIG. 8, which depicts an example of a second matrix 122-2 for a second given category 118-2, such as "ART" (e.g., as depicted). The second matrix 122-2 is structured in a similar manner as the first matrix 122-1, however the similarity scores 602 are different due at least to the second given category 118-2 being different from the first given category 118-1, and hence associated pairs of text descriptions 402 for SOIs 114, for the second given category 118-2, will be different from associated pairs of text descriptions 402 for SOIs 114, for the first given category 118-1.

It is furthermore understood that for the SOI 114 of "SOI 1", as the similarity score 602 of "78" between the SOIs 114 of "SOI 1" and "SOI 2" is the highest similarity score 602 in the first row and/or the first column, the SOI 114 of "SOI 2" is most similar to the SOI 114 of "SOI 1" with respect to the second given category 118-2 of "ART".

Similarly, for the SOI 114 of "SOI 1", as the similarity score 602 of "28" between the SOIs 114 of "SOI 1" and "SOI 3" is the lowest similarity score 602 in the first row and/or the first column, the SOI 114 of "SOI 3" is least similar to the SOI 114 of "SOI 1" with respect to the second given category 118-2 of "ART".

Similar determinations may occur for each intersection of a row and column, and the like, for given pairs of the SOIs 114, and for the second given category 118-2 of "ART".

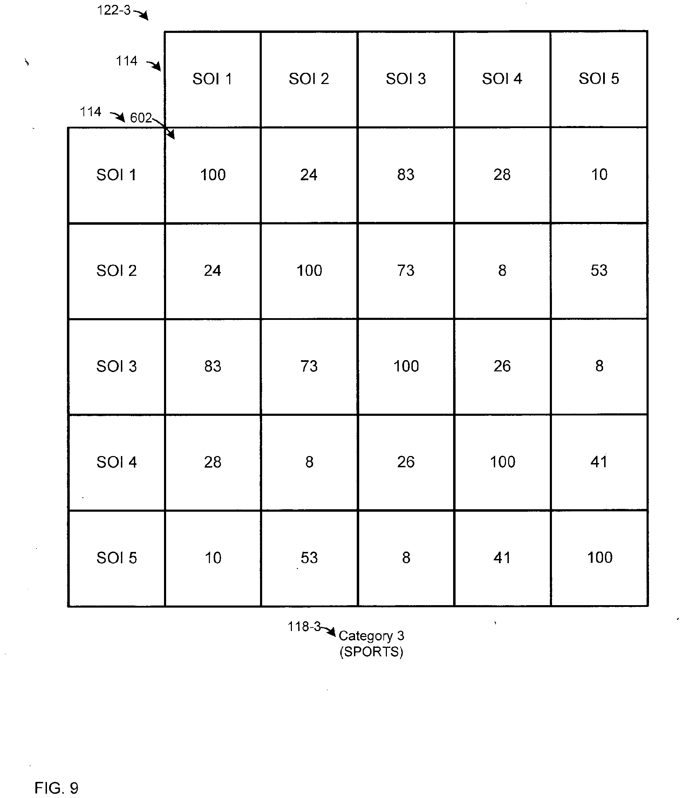

Attention is next directed to FIG. 9, which depicts an example of a third matrix 122-3 for a third given category 118-3, such as "SPORTS" (e.g., as depicted). The third matrix 122-3 is structured in a similar manner as the first matrix 122-1 and/or the second matrix 122-2, however the similarity scores 602 are different due at least to the third given category 118-3 being different from the first given category 118-1 and the second given category 118-2, and hence associated pairs of text descriptions 402 for SOIs 114, for the third given category 118-3, will be different from associated pairs of text descriptions 402 for SOIs 114, for the first given category 118-1 and the second given category 118-2.

It is furthermore understood that for the SOI 114 of "SOI 1", as the similarity score 602 of "83" between the SOIs 114 of "SOI 1" and "SOI 3" is the highest similarity score 602 in the first row and/or the first column, the SOI 114 of "SOI 3" is most similar to the SOI 114 of "SOI 1" with respect to the third given category 118-3 of "SPORTS".

Similarly, for the SOI 114 of "SOI 1", as the similarity score 602 of "10" between the SOIs 114 of "SOI 1" and "SOI 5" is the lowest similarity score 602 in the first row and/or the first column, the SOI 114 of "SOI 5" is least similar to the SOI 114 of "SOI 1" with respect to the third given category 118-3 of "SPORTS".

Similar determinations may occur for each intersection of a row and column, and the like, for given pairs of the SOIs 114, and for the third given category 118-3 of "SPORTS".

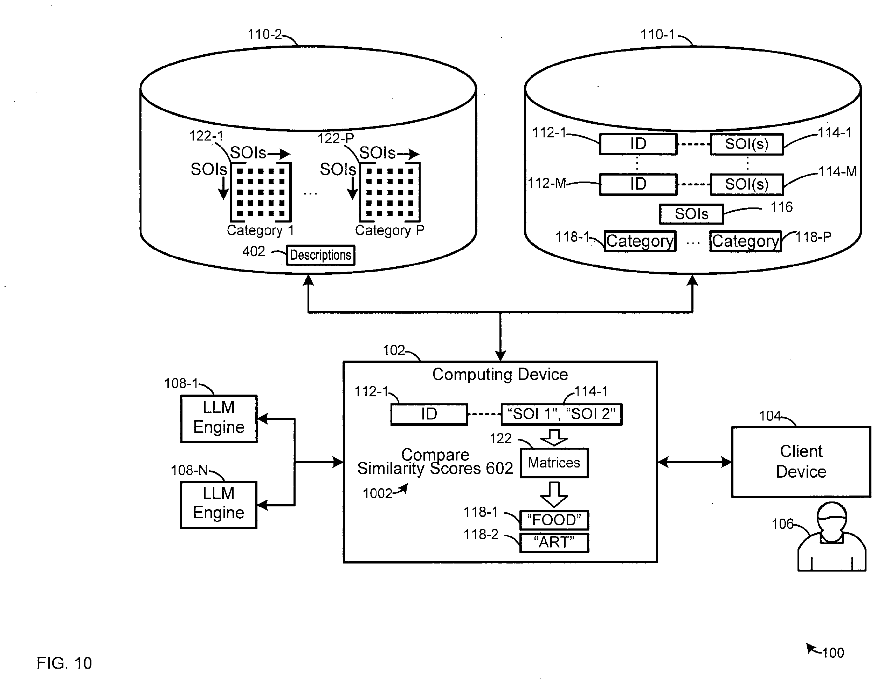

Attention is next directed to FIG. 10, which depicts the system 100 in a state similar to as depicted in FIG. 1, but with the text descriptions 402 also stored at the second memory 110-2.

FIG. 10 further depicts an example of the block 306 for the given identifier 112-1 and the associated SOIs 114-1, which, as depicted, are understood to comprise the SOIs 114 of "SOI 1" and "SOI 2". Put another way, the associated SOIs 114-1 include the SOIs 114 of "SOI 1" and "SOI 2", and exclude the remaining SOIs 114 of "SOI 3", "SOI 4", and "SOI 5".

For example, the computing device 102 may be generating a message specific to the client device 104 associated with the first identifier 112-1, and/or the client device 104 may be engaged in a chat session, and the like with the computing device 102.

Regardless, in this example, and with reference to FIG. 7, FIG. 8 and FIG. 9, the computing device 102 is comparing 1002 similarity scores 602 between the associated SOIs 114-1 "SOI 1" and "SOI 2" in the matrices 122.

In particular, the computing device 102 determines that the associated SOIs 114-1 "SOI 1" and "SOI 2" are most similar with respect to the first given category 118-1 of "FOOD" as the similarity score 602 therebetween for the first given category 118-1 of "FOOD" is "86" (e.g., see the first matrix 122-1 of FIG. 7), which is higher than the similarity score 602 therebetween of "78" for the second given category 118-2 of "ART" (e.g., see the second matrix 122-2 of FIG. 8), and higher than the similarity score 602 therebetween of "23" for the third given category 118-3 of "SPORTS" (e.g., see the third matrix 122-3 of FIG. 9). The computing device 102 may hence further determine that the associated SOIs 114-1 "SOI 1" and "SOI 2" are next most similar with respect to the second given category 118-2 of "ART", and least similar in the third given category 118-3 of "SPORTS".

Indeed, while not depicted, the computing device 102 may compare the similarity scores 602 between the SOIs 114 of "SOI 1" and "SOI 2" to a threshold similarity score, such as 65, 70, 75, and the like, and determine that the similarity scores 602 between the SOIs 114 of "SOI 1" and "SOI 2" for the first given category 118-1 and the second given category 118-2 are above the threshold score. In this example, the computing device 102 may select the first given category 118-1 and the second given category 118-2, and the corresponding first matrix 122-1 and second matrix 122-2, for use in determining which remaining SOIs 114 to select at the block 308.

Alternatively, or in addition, the computing device 102 may be preconfigured with a given number of "two" given categories 118, and select two of the given categories 118 having the two highest similarity scores 602 between the SOIs 114 of "SOI 1" and "SOI 2". In this example, as depicted, the computing device 102 may select the first given category 118-1 and the second given category 118-2, and the corresponding first matrix 122-1 and second matrix 122-2, for use in determining which remaining SOIs 114 to select at the block 308.

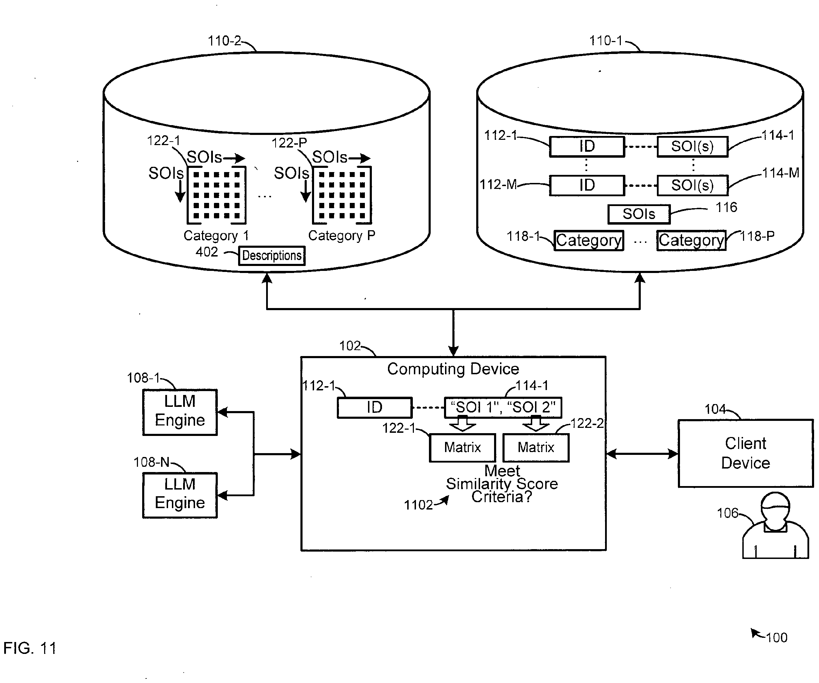

Attention is next directed to FIG. 11, which depicts an example of a portion of the block 308 of the method 300. Hereafter, for simplicity and convenience, reference will be made to criteria for selecting remaining SOIs 114 as defined by the block 308. In particular reference will be made to "closest similarity score" selection criteria of selecting one or more remaining SOIs 114 having associated similarity scores 602 with the one or more given SOIs 114 (e.g., of a given identifier 112) that are closest to the respective similarity scores 602 between the one or more given SOIs 114. Furthermore, reference will be made to "highest similarity score" selection criteria of selecting one or more remaining SOIs 114 having highest similarity scores with the one or more given SOIs 114.

In particular, the computing device 102 processes the first matrix 122-1 and the second matrix 122-2, for use in determining which remaining SOIs 114 to select. In general, the computing device 102 determines results to provide to the client device 104 without using the LLM engines 108. In particular, the computing device 102 processes the first matrix 122-1 and the second matrix 122-2, and in particular the similarity scores 602 of the first matrix 122-1 and the second matrix 122-2, to select one or more of the remaining SOIs 114 of "SOI 3", "SOI 4", "SOI 5" that meet 1102 the "closest similarity score" selection criteria and/or the "highest similarity score" selection criteria.

For example, with reference to FIG. 7, the computing device 102 may process the first matrix 122-1 and determine that, the remaining SOI 114 of "SOI 3" meets the "closest similarity score" selection criteria with respect to both the given SOIs 114 of "SOI 1" and "SOI 2" (e.g., due to respective similarity scores 602 of "80" and "84" being closest to "86" respectively in both the first and second row, and/or the first and second column).

The computing device 102 may further determine that the remaining SOI 114 of "SOI 3" meets the "highest similarity score" selection criteria (e.g., due to the similarity score 602 of "80" being the highest similarity score 602 in the first row and/or the first column) with respect to the given SOI 114 of "SOI 1", but that the remaining SOI 114 of "SOI 5" meets the "highest similarity score" selection criteria (e.g., due to the similarity score 602 of "99" being the highest similarity score 602 in the second row and/or the second column) with respect to the given SOI 114 of "SOI 2".

Similarly, with reference to FIG. 8, the computing device 102 may process the second matrix 122-1 and determine that, the remaining SOI 114 of "SOI 4" meets the "closest similarity score" selection criteria with respect to the given SOI 114 of "SOI 1" (e.g., due to the respective similarity score 602 of "43" being closest to "78" in the first row and/or the first column) and that the remaining SOI 114 of "SOI 3" meets the "closest similarity score" selection criteria with respect to the given SOI 114 of "SOI 2" (e.g., due to the respective similarity score 602 of "61" being closest to "78"" in the second row and/or the second column).

The computing device 102 may further determine that the remaining SOI 114 of "SOI 4" meets the "highest similarity score" selection criteria (e.g., due to the similarity score 602 of "43" being the highest similarity score 602 in the first row and/or the first column) with respect to the given SOI 114 of "SOI 1", but that the remaining SOI 114 of "SOI 3" meets the "highest similarity score" selection criteria (e.g., due to the similarity score 602 of "61" being the highest similarity score 602 in the second row and/or the second column) with respect to the given SOI 114 of "SOI 2".

Hence, using both the aforementioned criteria, the computing device 102 may determine that one or both of the remaining SOIs 114 of "SOI 3" and "SOI 5" are most similar to one or more of the given SOIs 114 of "SOI 1" and "SOI 2" with respect to the first category 118-1 of "FOOD", and that one or both of the remaining SOIs 114 of "SOI 3" and "SOI 4" are most similar to one or more of the given SOIs 114 of "SOI 1" and "SOI 2" with respect to the second category 118-2 of "ART".

In some examples, however, the computing device 102 may apply a threshold criteria when determining closest similarity scores 602, such as, for two similarity scores 602 to be similar, a similarity score 602, between a remaining SOI 114 and one of the given SOIs 114, that is below the similarity score 602 of the given SOIs 114 must be within at least a given percentage of each other (e.g., such 10%, 15%, 20%, 25%, 30% amongst other possibilities). For example, using a given percentage of 25%, the computing device 102 may discard the remaining SOI 114 of "SOI 4" as the similarity score 602 of "43" is not within a given percentage of 25% of the similarity score 602 of "78".

In some of these examples, the computing device 102 may select all of the remaining SOIs 114 that meet the "closest similarity score" selection criteria and the "highest similarity score" selection criteria according to both of the matrices 122-1, 122-2, and also using the aforementioned threshold criteria for the "closest similarity score" selection criteria. Hence, in these examples, rather than select the remaining SOIs 114 of "SOI 3", "SOI 4" and "SOI 5", the computing device 102 may select only the remaining SOIs 114 of "SOI 3" and "SOI 5".

In some examples, applying both the "closest similarity score" selection criteria and the "highest similarity score" selection criteria may lead to as many as twice the number of remaining SOIs 114 being selected as there are given SOIs 114 (e.g., one remaining SOI 114 selected for each of the given SOIs 114 for both the "closest similarity score" selection criteria and the "highest similarity score" selection criteria). Put another way, while present examples are described with respect to only five SOIs 114 total, the number of the SOIs 114 on the list 116 may be in the tens, hundreds, thousands, or higher, and, in an extreme case, the "closest similarity score" selection criteria and the "highest similarity score" selection criteria may cause two different remaining SOIs 114 to be selected for each of the given SOIs 114.

As such, the computing device 102 may further average and/or combine similarity scores 602 to select remaining SOIs 114 as is next described.

For example, attention is next directed to FIG. 12 which depicts vectors 1201, 1202, 1203, showing different examples of how similarity scores 602 of the matrices 122-1, 122-2 may be averaged and/or combined.

In particular, the vector 1201 depicts respective average similarity scores 602 between the remaining SOIs 114 of "SOI 3", "SOI 4", "SOI 5", and both the given SOIs 114 of "SOI 1", "SOI 2", for the first matrix 122-1. For example, with reference to FIG. 7, similarity scores 602 between the remaining SOI 114 of "SOI 3" and each of the given SOIs 114 of "SOI 1", "SOI 2" are "80" and "84", respectively; hence, in the vector 1201, the average similarity scores 602 between the remaining SOI 114 of "SOI 3" and both the given SOIs 114 of "SOI 1", "SOI 2" is "82" (e.g., average of "80" and "84"). The remaining average similarity scores 602 of the vector 1201 are determined in a similar manner.

Average similarity scores 602 of the vector 1202 are determined in a similar manner, but with respect to the second matrix 122-2. For example, with reference to FIG. 8, similarity scores 602 between the remaining SOI 114 of "SOI 3" and each of the given SOIs 114 of "SOI 1", "SOI 2" are "28" and "61", respectively; hence, in the vector 1202, the average similarity scores 602 between the remaining SOI 114 of "SOI 3" and both the given SOIs 114 of "SOI 1", "SOI 2" is "44.5" (e.g., average of "28" and "61"). The remaining average similarity scores 602 of the vector 1202 are determined in a similar manner.

In contrast, the vector 1203 comprises averages of similarity scores 602 when combining the vectors 1201, 1202. For example, for the remaining SOI 114 of "SOI 3", averaging the corresponding average similarity scores 602 of "82" and "44.5" from the vectors 1201, 1202 results in an average similarity score 602 of "63.25". The remaining average similarity scores 602 of the vector 1203 are determined in a similar manner.

Hence, in general, the vectors 1201, 1202 indicate that, using the "closest similarity score" selection criteria, and applying the aforementioned threshold criteria, the average similarity scores 602 of the vector 1201 indicate that both the remaining SOIs 114 of "SOI 3" and "SOI 5" may be similar to the given SOIs 114 of "SOI 1" and "SOI 2" for the given category of "FOOD", and the vector 1202 indicates that, for the given category 118 of "Art", none of the average similarity scores 602 of the vector 1202 indicate similar remaining SOIs 114 exist for the given category 118 of "Art".

However, using the "highest similarity score" selection criteria, the average similarity scores 602 of the vector 1201 indicate the remaining SOI 114 of "SOI 5" may be similar to the given SOIs 114 of "SOI 1" and "SOI 2" for the given category of "FOOD", and the average similarity scores 602 of the vector 1202 indicate the remaining SOI 114 of "SOI 3" may be most similar to the given SOIs 114 of "SOI 1" and "SOI 2" for the given category of "ART".

However, using the vector 1203, and a threshold criterion of 27%, only the remaining SOI 114 of "SOI 3" may meet the either the "closest similarity score" selection criteria and the " highest similarity score " selection criteria.

Alternatively, or in addition, rather than apply threshold criteria to select remaining SOIs 114 using one or more of the vectors 1201, 1202, 1203, a given number of the remaining SOIs 114 having highest average and/or combined similarity scores 602 may be selected, such as one of the remaining SOIs 114, two of the remaining SOIs 114, amongst other possibilities.

In other examples, an average of a combination of the two matrices 122-1, 122-2 may be determined as depicted in a matrix 1301 of FIG. 12. Each similarity score 602 of the matrix 1301 is an average of corresponding similarity scores 602 of the matrices 122-1, 122-2. For example, the average similarity score 602 between the given SOIs 114 of "SOI 1" and "SOI 2" is "82", which is an average of similarity scores 602 of "86" and "78" of the matrices 122-1, 122-2. The remaining average similarity scores 602 of the matrix 1301 are determined in a similar manner.

Again applying the "closest similarity score" selection criteria and the " highest similarity score " selection criteria, and a threshold criteria of 27%, the remaining SOIs 114 of "SOI 3" and/or "SOI 5" may be selected as being most similar to the given SOIs 114 of "SOI 1" and/or "SOI 2".

Hence, the examples described with respect to FIG. 12 and FIG. 13 show that different combinations and/or averages of the similarity scores 602 of the matrices 122-1, 122-2 may lead to selecting one or both of the remaining SOIs 114 of "SOI 3" and "SOI 5" as being most similar to the given SOIs 114 of "SOI 1" and "SOI 2". However, the computing device 102 may be configured to implement any particular scheme as described herein for implementing the block 308 of the method 300.

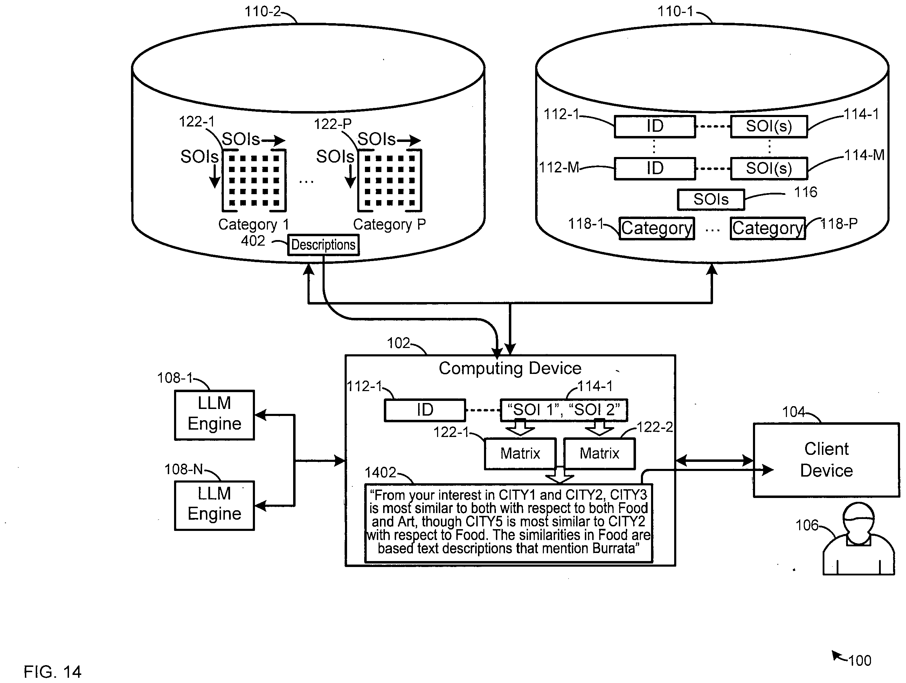

Attention is next directed to FIG. 14, which depicts the computing device 102 implementing the block 310 of the method 300.

In particular, the computing device 102 is understood to have selected the remaining SOI 114 of "SOI 3" for being most similar to the given SOIs 114 of "SOI 1" and "SOI 2" for the categories 118 of "Food" and "Art", for example based on the vector 1203, but further selected the remaining SOI 114 of "SOI 5" for being most similar to the given SOI 114 of "SOI 2" for the category 118 of "Food" based on the first matrix 112-1 (e.g., due to the "highest similarity score" selection criteria).

As such, the computing device 102 has generated an indicator 1402 that indicates that "From your interest in CITY1 and CITY2, CITY3 is most similar to both with respect to both Food and Art, though CITY5 is most similar to CITY2 with respect to Food. The similarities in Food are based text descriptions that mention Burrata".

Furthermore, such an indicator 1402 incorporates at least a portion of one or more of the text descriptions 402 that may be retrieved from the second memory 122-2, to indicate a reason why at least the SOI 114 of "SOI 5" is most similar to the SOI 114 of "SOI 2" with respect to the category 118 of "Food". For example, it is understood that the text descriptions 402 of both the SOIs 114 of "SOI 2" and "SOI 5" may both mention "Burrata", and hence the text "Burrata" that is common to the text descriptions 402 of both the SOIs 114 of "SOI 2" and "SOI 5" may be incorporated into the indicator 1402.

Alternatively, or in addition, the indicator 1402 may incorporate all the text descriptions 402 associated with the SOIs 114 mentioned in the indicator 1402 that lead to the similarity scores 602 that caused the computing device 102 to select the one or more remaining SOI 114 at the block 308 of the method 300.

Indeed, incorporating all the text descriptions 402, either as a whole, or partially, associated with the SOIs 114 in the indicator 1402 may cause the selection of the SOI 114 to meet a criteria of explainability (e.g., providing an explanation of how and/or why a given result was provided). Similarly, selecting the SOIs 114 in the indicator 1402 via the matrices 122 (and/or vectors) and the like may meet a criteria of sustainability (e.g., minimizing or reducing power consumption and hence CO₂ emissions by reducing usage of the LLMs 108). Similarly, selecting the SOIs 114 in the indicator 1402 via SOIs 114 historically associated with an identifier 112, which may exclude PII, may meet a criteria of privacy (e.g., minimize usage of user information when providing results).

As should by now be apparent, the operations and functions of the devices described herein are sufficiently complex as to require their implementation on a computer system, and cannot be performed, as a practical matter, in the human mind. In particular, computing devices, and the lie, such as set forth herein are understood as requiring and providing speed and accuracy and complexity management that are not obtainable by human mental steps, in addition to the inherently digital nature of such operations (e.g., a human mind cannot interface directly with, RAM or other digital storage, cannot transmit or receive electronic messages, generate LLM responses, cannot operate machine learning feedback loops, among other features and functions set forth herein).

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

Furthermore, descriptions of one processor and/or controller and/or device and/or engine, and the like, configured to perform certain functionality is understood to include, but is not limited to, more than one processor and/or more than one controller and/or more than one device and/or more than one engine, and the like performing such functionality.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that in some examples, the functionality of devices and/or methods and/or processes described herein may be implemented using pre-programmed hardware or firmware elements (e.g., application specific integrated circuits (ASICs), electrically erasable programmable read-only memories (EEPROMs), etc.), or other related components. In other examples, the functionality of the devices and/or methods and/or processes described herein may be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program may be stored as a computer program product comprising a computer usable medium. Further, a persistent storage device may comprise the computer readable program code. It is yet further appreciated that the computer-readable program code and/or computer usable medium may comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium may be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

## Claims

1. A method comprising:
for given categories, generating, via a computing device, using one or more large language model (LLM) engines, associated text descriptions describing, with respect to the given categories, a plurality of subjects-of-interest (SOIs);
determining, via the computing device, for the given categories, respective similarity scores between pairs of the plurality of SOIs by comparing the associated text descriptions for the given categories of the plurality of SOIs;
for a given identifier with an historical association with one or more given SOIs of the plurality of SOIs, comparing, via the computing device, for the given categories, the respective similarity scores between the one or more given SOIs with other similarity scores between the one or more given SOIs and remaining SOIs of the plurality of SOIs;
selecting, via the computing device, for one or more of the given categories, one or more of the remaining SOIs having associated similarity scores with the one or more given SOIs, closest to the respective similarity scores between the one or more given SOIs, or having highest similarity scores with the one or more given SOIs; and
outputting, via the computing device, one or more respective indicators of the one or more of the remaining SOIs, as selected, to a client device associated with the given identifier.

2. The method of claim 1, wherein selecting of the one or more of the remaining SOIs occurs without further use of the one or more LLM engines.

3. The method of claim 1, wherein generating the associated text descriptions using the one or more LLM engines uses at least one of more processing power and more energy than comparing, for the given categories, the respective similarity scores between the one or more given SOIs with the other similarity scores between the one or more given SOIs and the remaining SOIs of the plurality of SOIs.

4. The method of claim 1, further comprising, as a number of historical associations between the given identifier, and the one or more given SOIs of the plurality of SOIs increases: repeating the comparing of the respective similarity scores, the selecting of the more of the remaining SOIs, and the outputting without repeating generating of the associated text descriptions and determining of the respective similarity scores.

5. The method of claim 1, further comprising:
generating the associated text descriptions using a plurality of the LLM engines, such that a plurality of the associated text descriptions are generated for each combination of a respective category and a respective SOI;
selecting one respective associated text description from the plurality of the associated text descriptions for each combination of the respective category and the respective SOI; and
using the one respective associated text description when comparing the associated text descriptions for the given categories of the plurality of SOIs.

6. The method of claim 1, wherein comparing the associated text descriptions for the given categories of the plurality of SOIs occurs using one or more of a semantic comparison algorithm and a term frequency-inverse document frequency algorithm.

7. The method of claim 1, wherein the given identifier is historically associated with two or more given SOIs, and the method further comprises:
selecting a given number of the given categories, having highest respective similarity scores between the two or more given SOIs; and
performing the comparing of the respective similarity scores by comparing, for only the given number of the given categories, the respective similarity scores between the two or more given SOIs with the other similarity scores between the two or more given SOIs and the remaining SOIs of the plurality of SOIs, such that the selecting of the one or more of the remaining SOIs occurs only for the given categories.

8. The method of claim 1, wherein the given identifier is historically associated with two or more given SOls, and the method further comprises:
selecting a given number of the given categories, having highest respective similarity scores between the two or more given SOIs;
for a given category of the given number of the given categories, combining the respective similarity scores between the two or more given SOIs and the remaining SOIs of the plurality of SOIs to generate combined respective similarly scores between the two or more given SOIs and the remaining SOIs; and
for the given category, selecting the one or more of the remaining SOIs having associated combined respective similarity scores, with the two or more given SOIs, closest to combined similarity scores between the two or more given SOIs, or having highest combined similarity scores with the one or more given SOIs, such that one or more of the remaining SOIs are selected, and the one or more respective indicators thereof are output to the client device, on a per category basis.

9. The method of claim 1, wherein the given identifier is historically associated with two or more given SOIs, and the method further comprises:
selecting a given number of the given categories, having highest respective similarity scores between the two or more given SOIs;
for all of the given number of the given categories, combining the respective similarity scores between the two or more given SOIs and the remaining SOIs of the plurality of SOIs to generate combined respective similarly scores between the two or more given SOIs and the remaining SOIs ; and
selecting the one or more of the remaining SOIs having associated combined respective similarity scores with the two or more given SOIs closest to combined similarity scores between the two or more given SOIs, or having highest combined similarity scores with the one or more given SOIs, such that one or more of the remaining SOIs are selected, and output to the client device, on a basis of combined categories.

10. The method of claim 1, wherein the given identifier is historically associated with two or more given SOIs, wherein the respective similarity scores between the pairs of the plurality of SOIs are determined in a form of vectors, and the method further comprises:
selecting a given number of the given categories, having highest respective similarity scores between the two or more given SOIs;
averaging respective vectors of the respective similarity scores between the two or more given SOIs and the remaining SOIs; and
selecting, for the one or more of the given categories, one or more of the remaining SOIs having associated similarity scores with the one or more given SOIs using at least one averaged vector.

11. A computing device comprising:
a communication interface;
a controller; and
a computer-readable storage medium having stored thereon program instructions that, when executed by the controller, cause the controller to perform a set of operations comprising the method of any one of claims 1 to 10.

12. A non-transitory computer-readable storage medium having stored thereon program instructions that, when executed by at least one computing device, causes the at least one computing device to perform the method of any one of claims 1 to 10.
